# EUROPEAN PATENT APPLICATION

(11) **EP 4 847 209 A1**
(43) Date of publication of application: **02.12.2026**
(21) Application number: 25747427.0
(22) Date of filing: 03.01.2025
(51) Int. Cl.: B25J 9/16

(54) **ROBOT CONTROL METHOD AND APPARATUS, DEVICE, STORAGE MEDIUM AND PROGRAM PRODUCT**

(30) Priority: 31.01.2024 CN 202410142136
(71) Applicant: Tencent Technology (Shenzhen) Company Limited, Shenzhen, Guangdong 518057 (CN)
(72) Inventor: LI, Tingguang, Shenzhen, Guangdong 518057 (CN); SHI, Haojie, Shenzhen, Guangdong 518057 (CN)
(74) Representative: Reddie & Grose LLP
(86) International application number: PCT/CN2025/070592
(87) International publication number: WO 2025/161851

(57) **Abstract**

A robot control method and apparatus, a device, a storage medium and a program product. The robot control method comprises: acquiring first state data and reference action data of a robot corresponding to each of at least two moments (210); under a control policy, and on the basis of first observation data at the t-th moment of the at least two moments and reference action data at the t-th moment, predicting predicted action data of the robot at the t-th moment (220); on the basis of the predicted action data at the t-th moment and first state data at the t-th moment, predicting the state of the robot at the k-th moment to obtain second state data at the k-th moment (230); and, on the basis of the second state data at the k-th moment and reference action data at the k-th moment, training the control policy to obtain a trained control policy (240).

## Description

This application claims priority to Chinese Patent Application No. 202410142136.X, filed on January 31, 2024 and entitled "ROBOT CONTROL METHOD AND APPARATUS, DEVICE, STORAGE MEDIUM AND PROGRAM PRODUCT", which is incorporated herein by reference in its entirety.

### FIELD OF THE TECHNOLOGY

Embodiments of the present disclosure relate to the field of machine learning, and in particular, to a robot control method and apparatus, a device, a storage medium, and a program product.

### BACKGROUND OF THE DISCLOSURE

With continuous development of robot technologies, robots have increasingly powerful functions, and different types of robots can deal with various working environments and execute different operation tasks according to operation instructions.

In the related art, a world model for simulating and predicting a physical world is usually adopted for providing a simulation environment for a robot, so that the robot can perform learning and experiments in an internally generated and simulated environment, thereby improving learning efficiency and safety of the robot without directly touching the physical world, and also achieving relatively high motion performance in the physical world.

In the foregoing process, although the robot can perform efficient learning by using the world model, when the robot needs to execute a high-precision task (e.g., precisely imitating an animal, or precisely moving on a specified route), based on simulation features of the world model, advantages of the physical world cannot be fully used in a process of training the robot by using the world model only, reducing accuracy of executing the high-precision task by the robot.

### SUMMARY

Embodiments of the present disclosure provide a robot control method and apparatus, a device, a storage medium, and a program product, so that a running condition of a robot in a physical world can be fully utilized for implementing an accurate supervised learning process, and an action of the robot is controlled by using a trained control policy, allowing the robot to have more accurate motion precision and a more stable running capability in a running process. The technical solutions are as follows.

In one aspect, a method for robot control is provided. The method is executable by a computing device and includes:
acquiring, for each of at least two moments, first state data and reference action data of a robot, the first state data being converted from first observation data collected by a sensor of the robot in a running environment, and the reference action data indicating an expected posture of the robot in the running environment;
generating, under a control policy, predicted action data of the robot at a t^{th} moment based on first observation data at the t^{th} moment and reference action data at the t^{th} moment, the control policy being configured to guide an action of the robot, and t being a positive integer;
generating second state data at a k^{th} moment by predicting a state of the robot at the k^{th} moment based on the predicted action data at the t^{th} moment and first state data at the t^{th} moment, the t^{th} moment and the the k^{th} moment being among the at least two moments, and the k^{th} moment being subsequent to the t^{th} moment; and
updating the control policy based on the second state data at the k^{th} moment and reference action data at the k^{th} moment, to obtain a trained control policy for robot control.

In another aspect, an apparatus for robot control is provided. The apparatus includes:
a data acquisition module, configured to acquire, for each of at least two moments, first state data and reference action data of a robot, the first state data being converted from first observation data collected by a sensor of the robot in a running environment, and the reference action data indicating an expected posture of the robot in the running environment;
an action prediction module, configured to generate, under a control policy, predicted action data of the robot at a t^{th} moment based on first observation data at the t^{th} moment and reference action data at the t^{th} moment, the control policy being configured to guide an action of the robot, and t being a positive integer;
a state prediction module, configured to generate second state data at a k^{th} moment by predicting a state of the robot at the k^{th} moment based on the predicted action data at the t^{th} moment and first state data at the t^{th} moment, the t^{th} moment and the the k^{th} moment being among the at least two moments, and the k^{th} moment being subsequent to the t^{th} moment; and
a policy training module, configured to update the control policy based on the second state data at the k^{th} moment and reference action data at the k^{th} moment, to obtain a trained control policy for robot control.

In another aspect, a computer device is provided. The computer device includes a processor and a memory. The memory has at least one instruction, at least one program, a code set, or an instruction set stored therein, and the at least one instruction, the at least one program, the code set, or the instruction set is loaded and executed by the processor to implement the robot control method according to any one of the foregoing embodiments of the present disclosure.

In another aspect, a computer-readable storage medium is provided. The storage medium has at least one instruction, at least one program, a code set, or an instruction set stored therein, and the at least one instruction, the at least one program, the code set, or the instruction set is loaded and executed by a processor to implement the robot control method according to any one of the foregoing embodiments of the present disclosure.

In another aspect, a computer program product or a computer program is provided. The computer program product or the computer program includes computer instructions, the computer instructions being stored in a computer-readable storage medium. A processor of a computer device reads the computer instructions from the computer-readable storage medium and executes the computer instructions, to cause the computer device to perform the robot control method according to any one of the foregoing embodiments.

The beneficial effects brought by the technical solutions provided in the embodiments of the present disclosure at least include:
after acquiring the first state data and the reference action data corresponding to each of the at least two moments, predicting the predicted action data of the robot at the t^{th} moment under the control policy, then predicting the state of the robot at the k^{th} moment according to the predicted action data and the first state data, to obtain the second state data, and obtaining the trained control policy through training by using the second state data at the k^{th} moment and the reference action data at the k^{th} moment. By using the collected first observation data, the running condition of the robot in the physical world can be fully utilized for implementing an accurate supervised learning process. Under the limitation of the reference action data, the predicted action data is obtained through the control policy, so that the second state data at the later moment can be predicted through the predicted action data and the first state data. The control policy can be adjusted in a targeted manner through the second state data and the reference action data, thereby obtaining more accurate predicted action data through the trained control policy, improving policy stability and policy application accuracy of the trained control policy, and accordingly allowing the robot to have more accurate motion precision and a more stable running capability in the running process.

### BRIEF DESCRIPTION OF THE DRAWINGS

FIG. 1 is a schematic diagram of an implementation environment according to an embodiment of the present disclosure.
FIG. 2 is a flowchart of a robot control method according to an embodiment of the present disclosure.
FIG. 3 is a flowchart of a robot control method according to another embodiment of the present disclosure.
FIG. 4 is a schematic diagram of training to obtain a world model according to an embodiment of the present disclosure.
FIG. 5 is a flowchart of a robot control method according to yet another embodiment of the present disclosure.
FIG. 6 is a schematic diagram of training a control policy according to an embodiment of the present disclosure.
FIG. 7 is a flowchart of a robot control method according to yet another embodiment of the present disclosure.
FIG. 8 is a schematic diagram of training a control policy according to still another embodiment of the present disclosure.
FIG. 9 is a schematic diagram of loss comparison between a robot control method according to an embodiment of the present disclosure and the related art.
FIG. 10 is a schematic diagram of loss comparison after fine tuning according to an embodiment of the present disclosure.
FIG. 11 is a schematic diagram of four trajectories according to an embodiment of the present disclosure.
FIG. 12 is a schematic diagram of comparison among following losses under different loads according to an embodiment of the present disclosure.
FIG. 13 is a schematic diagram of comparison among following losses under different velocities according to an embodiment of the present disclosure.
FIG. 14 is a schematic diagram of velocity comparison at different iteration counts according to an exemplary of the present disclosure.
FIG. 15 is a schematic diagram of velocity comparison under different control policies according to an embodiment of the present disclosure.
FIG. 16 is a schematic diagram of comparison between trajectory following corresponding to four different trajectories according to an embodiment of the present disclosure
FIG. 17 is a structural block diagram of a robot control apparatus according to an embodiment of the present disclosure.
FIG. 18 is a structural block diagram of a server according to an embodiment of the present disclosure.

### DESCRIPTION OF EMBODIMENTS

First, terms involved in embodiments of the present disclosure are briefly introduced.

Robots: A robot is a mechanical device or a virtual device that automatically executes a task, and is usually designed to complete a particular human job or execute a particular function. The robot may have capabilities of sensing, decision making, and execution, so that the robot can interact with an environment and complete a complex task. The robot usually has various capabilities such as a learning capability (usually implemented through machine learning and deep learning technologies), a certain autonomous capability, an environmental perception capability (implemented through sensors such as a camera, Lidar, and sonar), a capability of determining perception information (e.g., path planning, target recognition, and task priority ranking), a task execution capability, and an interaction capability. The robot, as a multifunctional engineering system, is widely applied to multiple fields such as an industrial field, a medical field, a service field, and an exploration field. With the progress of technologies, the application of the robot continuously evolves.

In the embodiments of the present disclosure, a robot control method is described, which can make full use of a running condition of the robot in the physical world to implement an accurate supervised learning process. Targeted training is implemented on a control policy through predicted second state data and reference action data obtained based on first observation data, to control an action of the robot by using the trained control policy, so that the robot can have more accurate motion precision and a more stable running capability in a running process. The robot control method according to the embodiments of the present disclosure may be applied to robot types such as a quadruped robot, a push robot, a robotic arm robot, and a wheeled robot, or may be applied to various scenarios such as the industrial field, the medical field, the service field, and the exploration field. The embodiments of the present disclosure do not impose limitations on this.

In some embodiments, an example in which the robot control method is applied to the robotic arm robot in the industrial field is used for description.

In an embodiment, the robotic arm robot has flexibility, high precision, and programmability, so that the robotic arm robot has a wide range of applications in the industrial field, such as executing high-precision fabrication and assembly tasks, executing a dangerous soldering task, executing a high-strength transportation and handling task, and executing a packaging task with a high quality requirement. To improve the motion precision of the robotic arm robot as fully as possible, first observation data of the robotic arm robot in a running environment may be collected through various types of sensors deployed on the robotic arm robot, and then state processing is performed on the first observation data to obtain first state data. Under the control policy, predicted action data of the robotic arm robot may be predicted based on the first observation data and reference action data, and then a state of the robotic arm robot at a later moment is predicted according to the predicted action data and the first state data, to obtain second state data, so as to train the control policy based on the second state data and the reference action data, to obtain a trained control policy. An action of the robotic arm robot can be controlled more precisely through the trained control policy, so that the robotic arm robot can provide a more efficient operational capability in the industrial field according to needs of a user through multiple motion types such as a rectilinear motion, a rotational motion, an arc motion, a joint motion, and a grabbing and releasing motion, thereby improving industrial running efficiency.

In some embodiments, an example in which the robot control method is applied to the quadruped robot in the service field is used for description.

In an embodiment, the quadratic robot is implemented as a robot dog. In the service field, including a psychical accompany service scenario, first observation data of the robot dog in a running environment may be collected through various types of sensors deployed on the robot dog, and then state processing is performed on the first observation data to obtain first state data. The first state data can well avoid the impact of an acquisition error or noise, and more comprehensively show a running condition of the robot dog. Under a control policy, predicted action data of the robot dog may be predicted based on the first observation data and reference action data, and then a state of the robot dog at a later moment is predicted according to the predicted action data and the first state data, to obtain second state data, so as to train the control policy based on the second state data and the reference action data, to obtain a trained control policy. An action of the robot dog can be controlled through the trained control policy, so that the robot dog can provide emotional companionship to the user through an operation such as moving, jumping, running, or sitting according to requirements of the user, thereby improving quality of life of the user.

The foregoing application scenarios are merely exemplary examples, a robot type and a robot application field may be randomly combined, and no limitations are imposed herein.

Information (including but not limited to user equipment information and user personal information), data (including but not limited to data for analysis, data for storage, and data for display), and signals mentioned in the present disclosure are all authorized by users or fully authorized by all parties, and collection, use, and processing of relevant data need to comply with relevant laws, regulations, and standards of relevant countries and regions. For example, contents such as the first observation data, the first state data, and the reference action data involved in the present disclosure are all acquired with full authorization.

In addition, an implementation environment involved in the embodiments of the present disclosure is described. The robot control method according to the embodiments of the present disclosure may be independently performed and implemented by a robot, or may be implemented by the robot and a server through data interaction. The embodiments of the present disclosure do not impose limitations on this. In some embodiments, an example in which the robot interacts with the server to perform the robot control method is used for description.

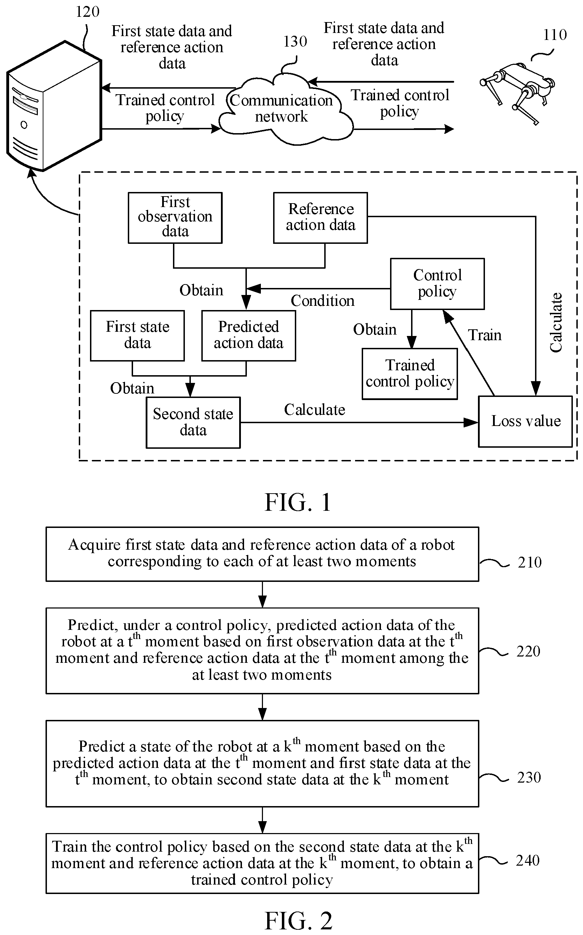

In an embodiment, reference is made to FIG. 1. The implementation environment involves a robot 110 and a server 120. The robot 110 is connected to the server 120 through a communication network 130.

In some embodiments, the robot 110 has a data acquisition function. For example, multiple types of sensors are deployed on the robot 110, such as an inertial measurement unit (IMU), a visual sensor, an infrared sensor, a contact sensor, a pressure sensor, a temperature sensor, a force/torque sensor, an angle sensor, an encoder for measuring a joint angle and position, and an optical sensor.

In an embodiment, first observation data may be collected by using various sensors deployed on the robot 110. In other words, the first observation data is data collected by the robot 110 through the sensor in a running environment. For example, a linear velocity and an angular velocity collected by the IMU deployed on the robot 110 are included, and a joint position, a joint velocity, and the like collected through the encoder are included.

In some embodiments, an example in which corresponding first observation data is respectively collected at at least two moments is used. Reference action data corresponding to each of the at least two moments may further be acquired, to represent an expected posture of the robot 110 in the running environment at a corresponding moment.

In some embodiments, to express a system state of the robot 110 in the running environment more systematically, first state data at a corresponding moment is obtained after state processing is performed on the first observation data. For example, state processing is performed on first observation data at a t^{th} moment through a state processing method, to obtain first state data at the t^{th} moment, where t is a positive integer.

In some embodiments, the robot 110 transmits first state data corresponding to each of at least two moments and reference action data corresponding to each of the at least two moments to the server 120 through the communication network 130, so that the server 120 acquires the first state data and the reference action data of the robot 110 corresponding to each of the at least two moments.

In an embodiment, the server 120 may obtain the first observation data through reverse reasoning according to the first state data. The server 120 may further receive the first observation data, and the like transmitted by the robot 110 through the communication network 130.

In some embodiments, the server 120 predicts, under the control policy, predicted action data of the robot 110 at the t^{th} moment based on the first observation data and reference action data at the t^{th} moment among the at least two moments.

In an embodiment, the control policy is a preset control policy, and is configured to predict, according to the first observation data collected by the sensor on the robot 110 and the determined reference action data, an action that the robot needs to perform at a current moment, that is, obtaining the predicted action data.

In some embodiments, the server 120 predicts a state of the robot 110 at a k^{th} moment based on the predicted action data and the first state data, to obtain second state data.

The k^{th} moment is a moment subsequent to the t^{th} moment among the at least two moments.

In an embodiment, after determining predicted state data at the t^{th} moment and the first state data at the t^{th} moment, the server may predict a state of the robot 110 at the k^{th} moment subsequent to the t^{th} moment, to obtain second state data at the k^{th} moment. In other words, the second state data is a predicted state result at the k^{th} moment.

In some embodiments, the server 120 trains the control policy based on the second state data at the k^{th} moment and reference action data at the k^{th} moment, to obtain a trained control policy.

The trained control policy is configured for controlling actions of the robot 110.

In some embodiments, the server 120 transmits the trained control policy to the robot 110 through the communication network 130, so that the robot 110 controls the actions of the robot 110 based on the trained control policy.

The foregoing robot includes, but is not limited to, a quadruped robot, a push robot, a robotic arm robot, and a wheeled robot. The foregoing server may be an independent physical server, or may be a server cluster or a distributed system composed of multiple physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

Cloud technology refers to a hosting technology that unifies a series of resources such as hardware, applications, and a network in a wide area network or a local area network, to implement data computing, storage, processing, and sharing. The cloud technology is a collective name for a network technology, an information technology, an integration technology, a management platform technology, an application technology, and the like based on an application of a cloud computing business mode, and may form a resource pool for on-demand use, providing flexibility and convenience.

In some embodiments, the foregoing server may alternatively be implemented as a node in a blockchain system.

With reference to the foregoing brief introduction to the terms and application scenarios, the robot control method according to the present disclosure is described. The method is performed by a computing device. In some embodiments, the computing device may be implemented as a robot, a server, a terminal device, or the like. In the embodiments of the present disclosure, an example in which the method is applied to the server is used for description. As shown in FIG. 2, the method includes the following step 210 to step 240.

Step 210: Acquire first state data and reference action data of a robot corresponding to each of at least two moments.

The first state data is data obtained by converting first observation data, and the first observation data is data collected by the robot through a sensor in a running environment.

In an embodiment, multiple types of sensors are deployed on the robot. The sensors may be deployed on a joint of the robot (e.g., an elbow joint, a knee joint, and a shoulder joint), or may be deployed on a position of an end effector (e.g., a tail end of a robotic arm), or may be deployed on multiple parts of the robot such as a head, a torso, and a touch point (e.g., a finger and a toe) of the robot. Deployment positions of the sensors usually depend on a design, a task, and an application requirement of the robot.

In some embodiments, at least one of the following types of sensors may be deployed on the robot: an inertial measurement unit (IMU), a visual sensor, an infrared sensor, a contact sensor, a pressure sensor, a temperature sensor, an optical sensor, an angle sensor, a force/torque sensor, an encoder for measuring a joint angle and position, etc.

The inertial measurement unit is also referred to as an inertial sensor, is usually composed of a gyroscope and an accelerometer, and is usually deployed on the joint of the robot. The gyroscope is configured to measure an angular velocity, and the accelerometer is configured to measure a linear acceleration. A linear velocity may be obtained by integrating the linear acceleration.

The visual sensor, such as a camera or a still camera, is configured to capture image or video data, to implement object recognition, scenario interpretation, navigation, searching for a moving object, and the like. The infrared sensor is configured to detect infrared light (thermal radiation), to measure a temperature (a non-contact thermometer), detect an organism, a heat source, or the like. The contact sensor is configured to detect physical contact to determine whether a robot component touches an object or a surface. The pressure sensor is configured to measure a pressure of gas or liquid, to ensure that a grabbed object is not damaged. The temperature sensor is configured to measure a temperature of an environment or an object, to maintain a thermal state and avoid overheat. The optical sensor detects an object, measures a distance, or senses an environment by using light, to implement precise distance measurement and environment scanning. The angle sensor is configured to measure a rotation angle or position, to precisely control angles of a robot joint and a rotating component. The force/torque sensor is configured to measure a force and a torque (a rotation force), is especially important in the robotic arm and an executor, and can help the robot execute a task with proper strength, such as precise assembly or object handling.

The encoder is configured to measure a joint angle and position, to provide high-precision angle information and position information, and is crucial for precise motion control of the robot. The encoder may be incremental (providing a relative position change) or absolute (providing absolute position information).

The foregoing sensor types are merely exemplary descriptions, and each type of sensor has its particular purposes and advantages. Typically, in a complex robot system, multiple different types of sensors are comprehensively used, to achieve higher functionality and adaptability, thereby implementing accurate motion control and perception.

In some embodiments, the first observation data is collected by the sensor deployed on the robot, and the first observation data is configured for representing a running condition of the robot in the running environment.

In an embodiment, the first observation data includes at least one of data collected by the sensor, such as a robot linear velocity (e.g., a value obtained by combining joint linear velocities respectively corresponding to multiple joints in the robot), a robot angular velocity (e.g., a value obtained by combining joint angular velocities respectively corresponding to the plurality of joints in the robot), joint positions (positions respectively corresponding to the plurality of joints in the robot), and a joint velocity (motion velocities respectively corresponding to the plurality of joints in the robot).

In some embodiments, the at least two moments are moments within a historical time period, the at least two moments respectively correspond to the first observation data, and the first observation data collected at different moments is configured for representing data collected by the robot through the sensor at the current moment. For example, first observation data G1 is collected at a moment 1, and the first observation data G1 is data collected by the robot at the moment 1 through the plurality of sensors deployed on the robot. First observation data G2 is collected at a moment 2, and the first observation data G2 is data collected by the robot at the moment 2 through the plurality of sensors deployed on the robot.

In some embodiments, the first observation data is converted into first state data through state processing, that is, the first state data is obtained after state processing is performed on the first observation data.

In an embodiment, a state processing method is adopted for performing state processing on the first observation data, to obtain the first state data. In some embodiments, the state processing method is a preset data conversion method, and is configured for performing comprehensive analysis on the first observation data collected by the sensor at the current moment, to extract the first state data representing the robot relative to the whole running environment.

For example, the first observation data, as data directly collected by the robot, may include much noise and redundant information, making it difficult to accurately estimate the robot as a whole. At least one of multiple technologies such as a filtering technology, a weight adjustment technology, and a data model mapping technology is used as the state processing method, to perform state processing on the first observation data, so that the first state data can better represent important information in the first observation data, and unnecessary noise information is filtered out, thereby simplifying analysis, reducing difficulty in understanding the robot, also improving analysis efficiency of the robot, and facilitating a better understanding and control of behaviors of the robot.

In some embodiments, the state processing method for implementing state processing is described by using the following example.
(1) Filtering algorithm: A filtering algorithm (e.g., a Kalman filter) is used as the state processing method, so that a pure running state of the robot can be extracted from the first observation data measured by the sensor, and the impact of noise is reduced, that is, the first state data is obtained.
(2) Mathematic model: If a dynamic behavior of the robot may be represented by using a mathematic model, the mathematic model may be used as the state processing method, and the first observation data measured by the sensor is mapped to the first state data through the mathematic model. The data model may relate to mathematical tools such as a differential equation and integral.
(3) Feature extraction: A feature extraction network is used as the state processing method, to extract a feature of sensor data, recognize a key feature of a robot state, and obtain the first state data. This process may be implemented by using technologies such as signal processing and pattern recognition.
(4) Machine learning: A machine learning algorithm may be used as the state processing method, and a pre-trained machine learning model learns a mapping relationship between observation data and state data corresponding to the robot from the sensor data, so as to obtain the first state data based on the collected first observation data. This process is useful for a nonlinear and complex system, and so on.

State processing is a key operation of mapping the first observation data collected by the sensor to the robot state (the first state data), and helps understand and control a behavior of the robot or another automation system. The foregoing state processing method is merely an exemplary example, which is not limited in the embodiments of the present disclosure.

In some embodiments, the first state data includes at least one of a robot position, a robot direction, a robot linear velocity, a robot angular velocity, a joint position, and a joint velocity. The first state data is obtained after state processing is performed on the first observation data. For example, the robot includes multiple joints, and the first state data includes a joint position P corresponding to a joint A1 in the plurality of joints. The joint position P is obtained through adjustment based on a joint position p corresponding to a joint A under the first observation data in combination with other data such as joint positions respectively corresponding to other joints, the robot linear velocity, and the robot angular velocity in the first observation data.

In some embodiments, when at least two moments respectively correspond to the first observation data, the first state data corresponding to each of the at least two moments may be obtained after state processing is performed on the first observation data corresponding to each of the at least two moments.

For example, the first observation data G1 is collected at the moment 1, and after state processing is performed on the first observation data G1, first state data Z1 corresponding to the moment 1 is obtained. The first observation data G2 is collected at the moment 2, and after state processing is performed on the first observation data G2, first state data Z2 corresponding to the moment 2 is obtained.

The reference action data is configured for representing an expected posture of the robot in the running environment, and the expected posture refers to a position and a posture that the robot is expected to reach in the running environment.

In an embodiment, at least two moments respectively correspond to one piece of reference action data, and the one piece of reference action data includes at least one of multiple action postures, such as a robot action (representing an overall action condition of the robot, e.g., a standing action, a creeping action, and a high leg lift action), and a joint action of each joint (e.g., the joint A bends by 45 ° and a joint B bends by 90 °). A reference action sequence may be obtained by combining the reference action data corresponding to each of the at least two moments. For example, the reference action sequence is (Q1, Q2, Q3, ...), where the moment 1 corresponds to reference action data Q1, the moment 2 corresponds to reference action data Q2, and so on. Motions that the robot is about to take in a particular task or environment may be described through the reference action sequence.

In some embodiments, the reference action sequence is acquired, the reference action data corresponding to each of the at least two moments is obtained by using division from the reference action sequence based on the at least two moments, each piece of reference action data corresponds to one moment, and multiple expected postures may be continuously executed to implement a reference action by integrating the expected postures respectively represented by the plurality of pieces of reference action data.

In an embodiment, the reference action sequence is implemented as at least one data set representing a continuous action, such as a teaching motion sequence, a simulation-generated trajectory, a learning-algorithm-generated action, or human motion capture.

The teaching motion sequence typically refers to a motion trajectory recorded after a human operator, an animal, or the like performs a series of motions. These motion trajectories may be configured for representing expected postures of the robot in similar scenarios. For example, if one robotic arm needs to grasp an object in space, the human operator may manually operate the robotic arm in a demonstrative manner to perform grasping, and use a recorded grasping trajectory as a reference action sequence, where at least two moments each correspond to one piece of reference action data.

The simulation-generated trajectory refers to a motion trajectory of the robot that is generated by using physical simulation or a motion planning algorithm, and these motion trajectories may be used as reference action sequences for executing a similar task in an actual environment. For example, a path for the robot to move to a target position is planned in simulation, and the generated path may be used as a reference action sequence, to be used as actual robot navigation.

The learning-algorithm-generated action, such as a machine learning method like reinforcement learning, may be configured for allowing the robot to generate a reference action sequence through trial-and-error learning. In this case, the robot may attempt continuously in the environment and adjust its action policy according to feedback, to finally form an optimized set of reference action sequences.

According to the human motion capture, for example, when a task of the robot relates to cooperative work with a human or imitation of a human action, a motion trajectory generated when the human executes the task may be recorded by using a human motion capture technology, and the motion trajectory is converted into a reference action sequence of the robot, to achieve expected postures respectively corresponding to different moments through the plurality of pieces of reference action data therein.

In other words, through the reference action data, the robot can be helped to learn how to adjust a posture and execute an action in different scenarios, so that the robot can be helped to better execute the task in the physical world, thereby improving adaptability and flexibility of the robot.

Step 220: Predict, under a control policy, predicted action data of the robot at a t^{th} moment based on first observation data and reference action data at the t^{th} moment among the at least two moments.

Here, t is a positive integer.

In an embodiment, the control policy is a preset control policy. The control policy refers to a rule, an algorithm, or a method configured for instructing and regulating a behavior of the robot. Under the control policy, an action condition of the robot at a current moment may be predicted according to first observation data and reference action data that are acquired at any moment, to execute an appropriate motion behavior according to the first observation data as limited by the reference action data as possible.

In some embodiments, the control policy is implemented as at least one of multiple algorithms such as an A * algorithm, a D * algorithm, and a proportional-integral-differential (PID) algorithm; or may be implemented as a model predictive control method (e.g., predicting a future state through a data model); or may be implemented as a reinforcement learning policy (a policy configured for optimizing a robot behavior by using trial-and-error learning, adjusting an action of the robot through a reward signal during interaction between the robot and the environment, to gradually learn an optimal policy). For example, a deep Q-network (DQN) and a deep deterministic policy gradient (DDPG) are widely used as network implementations of the reinforcement learning policy.

In an embodiment, the t^{th} moment is any one of the at least two moments other than the last moment. An example in which the predicted action data at the t^{th} moment is predicted through the first observation data at the t^{th} moment and the reference action data at the t^{th} moment is used, the first observation data at the t^{th} moment and the reference action data at the t^{th} moment are used as independent variables of the control policy, that is, the first observation data at the t^{th} moment and the reference action data at the t^{th} moment are substituted into or inputted into the control policy, to predict the predicted action data of the robot at the t^{th} moment.

In other words, the predicted action data is a result outputted by the control policy, and is configured for predicting the action condition of the robot at the current moment.

Step 230: Predict a state of the robot at a k^{th} moment based on the predicted action data at the t^{th} moment and first state data at the t^{th} moment, to obtain second state data at the k^{th} moment.

The k^{th} moment is a moment subsequent to the t^{th} moment among the at least two moments.

In an embodiment, after the predicted action data at the t^{th} moment and the first state data at the t^{th} moment are obtained, how the robot changes its state within a short time is predicted through the predicted action data at the t^{th} moment, to obtain a predicted state change. The process involves integrating motion equations or performing deduction by using the mathematic model. Then, the first state data at the t^{th} moment is combined with the predicted state change, to achieve a purpose of transition from the first state data, and obtain the second state data at the k^{th} moment.

Step 240: Train the control policy based on the second state data at the k^{th} moment and reference action data at the k^{th} moment, to obtain a trained control policy.

In an embodiment, the k^{th} moment is used as one of the at least two moments, and the reference action data corresponding to each of the at least two moments is acquired, including the reference action data at the k^{th} moment.

After the second state data at the k^{th} moment is predicted, it may be determined, based on the collected first observation data at the k^{th} moment, that the reference action data at the k^{th} moment has strong purposiveness. Therefore, the predicted second state data at the k^{th} moment may be compared with the reference action data at the k^{th} moment, to determine a difference between the second state data at the k^{th} moment and the reference action data at the k^{th} moment.

In some embodiments, using supervised learning as an example, a loss value may be determined through the reference action data and the predicted second state data. The loss value is configured for indicating a difference between the reference action data and the predicted second state data. The loss value may be calculated through a mean square error (MSE), or may be calculated through a cross-entropy loss, or may be calculated through a user-defined loss function. Selection of a related loss function depends on the nature of a task and a definition of a problem, and is not specifically limited herein.

In some embodiments, the control policy is trained through the loss value, to obtain the trained control policy.

In an embodiment, the control policy is implemented as an algorithm. The control policy includes multiple algorithm parameters. When the control policy is trained through the loss value, a purpose of optimizing the control policy is achieved by changing the algorithm parameters.

In some embodiments, a rate of change of the loss function relative to the algorithm parameters is calculated when the loss value is determined, to obtain a gradient value. Further, the algorithm parameters of the control policy are updated according to the gradient value by using an optimization algorithm (e.g., a gradient descent algorithm), to reduce the loss value, until the number of times of training is reached or the loss value decreases to a preset threshold, to obtain the trained control policy.

The trained control policy is configured for controlling the action of the robot.

In some embodiments, after the trained control policy is obtained, the predicted action data of the robot at the current moment can be predicted under the trained control policy based on the first observation data at any moment and the reference action data at the moment, so that the robot executes a motion process at the current moment through the predicted action data.

The foregoing descriptions are merely exemplary examples, and are not limited by the embodiments of the present disclosure.

In conclusion, by using the collected first observation data, the running condition of the robot in the physical world can be fully utilized to implement an accurate supervised learning process. Under the limitation of the reference action data, the predicted action data is obtained through the control policy, so that the second state data at the later moment can be predicted through the predicted action data and the first state data. The control policy can be adjusted in a targeted manner through the second state data and the reference action data, thereby obtaining more accurate predicted action data through the trained control policy, improving policy stability and policy application accuracy of the trained control policy, and accordingly allowing the robot to have more accurate motion precision and a more stable running capability in the running process.

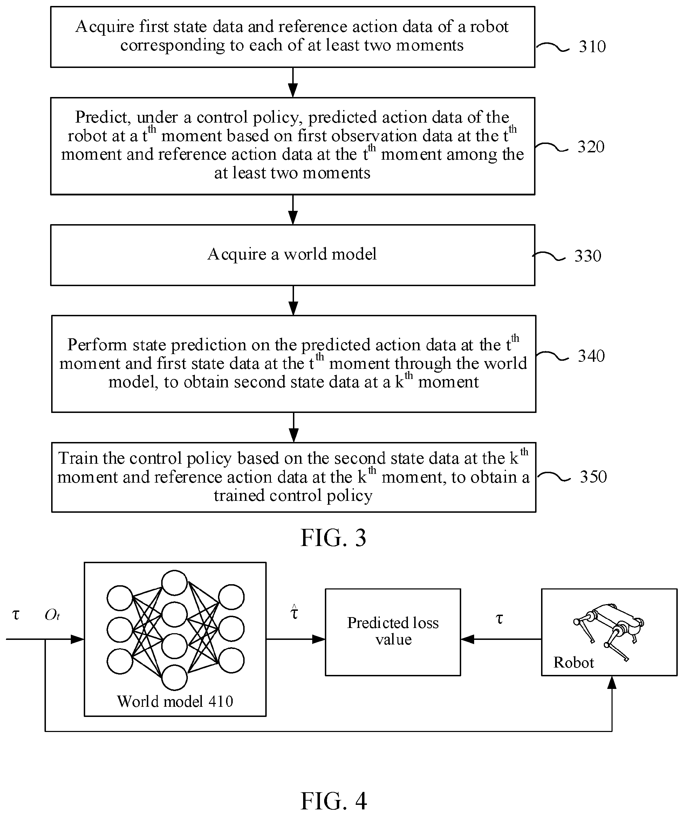

In an embodiment, state prediction is performed by using a world model according to the predicted action data and the first state data, to obtain the second state data, and the world model in artificial intelligence is a machine learning system that builds an internal representation of an environment. In an embodiment, the world model is a model trained based on the first state data and the first observation data. In an embodiment, as shown in FIG. 3, the foregoing embodiment shown in FIG. 2 may further be implemented in the following step 310 to step 350, where step 230 may further be implemented in the following step 330 to step 340.

Step 310: Acquire first state data and reference action data of a robot corresponding to each of at least two moments.

The first state data is data obtained after state processing is performed on first observation data, and the first observation data is data collected by the robot through a sensor in a running environment. The reference action data is configured for representing an expected posture of the robot in the running environment.

In an embodiment, multiple types of sensors are deployed on the robot. When the robot runs in the running environment, the plurality of sensors deployed on the robot are in a running state, and can collect data in real time or periodically, to obtain the first observation data corresponding to each of the at least two moments. For example, if the data is collected at a periodic interval of every second, the at least two moments represent multiple seconds, each second corresponds to one piece of first observation data, and the first observation data includes at least one of data collected by the sensor, such as a robot linear velocity, a robot angular velocity, a joint position, and a joint velocity.

In some embodiments, the first state data corresponding to each of the at least two moments is obtained after state processing is performed on the first observation data corresponding to each of the at least two moments.

For example, the first observation data G1 is collected at the moment 1, and after state processing is performed on the first observation data G1, first state data Z1 corresponding to the moment 1 is obtained. The first observation data G2 is collected at the moment 2, and after state processing is performed on the first observation data G2, first state data Z2 corresponding to the moment 2 is obtained.

In an embodiment, the first state data includes at least one of a robot position, a robot direction, a robot linear velocity, a robot angular velocity, a joint position, and a joint velocity.

The reference action data is configured for representing an expected posture of the robot in the running environment.

In some embodiments, the first observation data respectively collected by the robot at the at least two moments is acquired. State processing is performed on the first observation data corresponding to each of the at least two moments, to obtain the first state data corresponding to each of the at least two moments.

In some embodiments, a reference action sequence is obtained.

The reference action sequence is configured for representing an expected posture sequence of the robot in the running environment, and the reference action sequence includes reference action data corresponding to each of the at least two moments. In other words, the at least two moments each correspond to one piece of reference action data, and the plurality of pieces of reference action data form the reference action sequence for representing an expected posture change condition of the robot at the at least two moments.

Step 320: Predict, under a control policy, predicted action data of the robot at a t^{th} moment based on first observation data at the t^{th} moment and reference action data at the t^{th} moment among the at least two moments.

The t^{th} moment is any one of the at least two moments other than the last moment, and t is a positive integer.

In an embodiment, the control policy is a preset policy, and the control policy is configured for guiding an action of the robot.

In some embodiments, the control policy may be implemented as an algorithm for instructing and regulating a behavior of the robot. Under the control policy, the first observation data at the t^{th} moment and the reference action data at the t^{th} moment may be substituted into the control policy, to calculate the predicted action data of the robot at the t^{th} moment.

In some embodiments, the control policy may be implemented as a machine learning model for instructing and regulating the behavior of the robot. Under the control policy, the first observation data at the t^{th} moment and the reference action data at the t^{th} moment may be inputted into the control policy, to learn underlying information therein through the machine learning model and predict the predicted action data of the robot at the t^{th} moment.

Step 330: Acquire a world model.

The world model is configured to predict a state of the robot, and the world model is a model trained based on the first state data and the first observation data.

In some embodiments, the world model is considered as a component or an application deployed on the robot. In the robot field, the world model is usually designed as an internal representation for simulating and understanding a physical environment in which the robot is located.

In an embodiment, the world model is the internal representation of the robot for the running environment, and is usually an abstract expression for a physical world. The world model is constructed by selectively capturing information related to task execution of the robot, and is used as a generative model that attempts to learn interaction between the robot and the running environment. The world model is a basis for the robot to understand and move in the physical world, and is a dynamic and continuously updated model.

In some embodiments, the world model is configured to estimate a state condition of the robot in the running environment, so that the robot can predict a future state, such as a position, a velocity change, or another behavior of the robot. In addition, based on a state prediction process of the world model, the robot may also implement task planning such as path planning and motion planning, that is, determine a state condition needed to reach a particular position.

The world model may be continuously updated, so that the robot may learn new knowledge from experience, and continuously adapt to a change in an environment and improve performance, thereby facilitating the robot to understand and interact with a complex environment. By improving complexity and accuracy, the capability of the robot to execute a task in the physical world can be improved.

In an embodiment, an environmental simulation model is acquired.

The environmental simulation model is a model to be trained to obtain the world model.

The environment simulation model is configured to predict predicted state data at a j^{th} moment according to first state data at an i^{th} moment and first observation data at the i^{th} moment. The i^{th} moment is a moment among the at least two moments, the j^{th} moment is a moment subsequent to the i^{th} moment among the at least two moments, i is a positive integer, and j is a positive integer.

In an embodiment, the environmental simulation model may be considered as an initialized world model, and the environmental simulation model has a certain state prediction function based on a model structure.

In some embodiments, the environmental simulation model performs the state prediction process according to the first state data and the first observation data.

In an embodiment, the i^{th} moment is any one of the at least two moments, and the j^{th} moment is a moment subsequent to the i^{th} moment among the at least two moments. The first state data at the i^{th} moment is determined from the first state data corresponding to each of the at least two moments. Alternatively, the first observation data at the i^{th} moment may be determined from the first observation data corresponding to each of the at least two moments. Further, the first state data at the i^{th} moment and the first observation data at the i^{th} moment are inputted to the environmental simulation model, to output the predicted state data at the j^{th} moment subsequent to the i^{th} moment.

In some embodiments, first action data corresponding to each of the at least two moments is acquired, and the first action data is configured for describing posture data generated when the robot moves in a motion environment.

In an embodiment, the first action data includes at least one type of information that expresses a motion state, such as a position, a direction, a velocity, an acceleration, and a joint target angle of the robot. The first action data is data collected by a motion sensor deployed on the robot.

The at least two moments each correspond to one piece of first action data. For example, the moment 1 corresponds to first action data D1, and the moment 2 corresponds to first action data D2.

In some embodiments, the environmental simulation model implements the state prediction process according to the first action data, the first state data, and the first observation data.

In an embodiment, the environmental simulation model predicts the predicted state data at the j^{th} moment according to the first action data at the i^{th} moment, the first state data at the i^{th} moment, and the first observation data at the i^{th} moment.

In some embodiments, the environmental simulation model predicts a state change difference at the j^{th} moment according to the first action data at the i^{th} moment and the first observation data at the i^{th} moment, and adds the state change difference at the j^{th} moment and the first state data at the i^{th} moment, to obtain the predicted state data at the j^{th} moment.

In an embodiment, as shown in the following formula 1, the formula 1 is a formula for predicting the predicted state data according to the environmental simulation model. Formula 1: ${\hat{s}}_{t + 1} = {f}_{w} \left(\left.{δs}_{t}\right|{o}_{t},{a}_{t},π\right) + {s}_{t}$

*sₜ* represents the first state data at the *t*^{th} moment; *ŝ*_{*t*+1} represents predicted state data at a moment *t* + 1 after predicting a state at the moment *t* + 1 subsequent to the *t*^{th} moment; *f_{w}* represents the environmental simulation model; *f_{w}*(*δsₜ*|*oₜ*, *aₜ*, *π*) represents a neural network expression of the environmental simulation model, parameterized by *θ_{w}*, expressing that input *w* includes *oₜ* and *aₜ*, *oₜ* represents the first observation data at the *t*^{th} moment , *aₜ* represents the first action data at the *t*^{th} moment, and *π* represents the control policy (in a fixed form); and *δsₜ* represents the state change difference at the j^{th} moment. Therefore, *f_{w}*(*δsₜ*|*oₜ*, *aₜ*, *π*) represents that under the control policy *π*, by inputting the first observation data *oₜ* at the *t*^{th} moment and the first action data *aₜ* at the *t*^{th} moment into the environmental simulation model *f_{w}*, the state change difference *δsₜ* at the *t* + 1^{th} moment may be predicted; and then, the predicted state data at the *t* + 1^{th} moment is obtained according to the state change difference *δsₜ*, at the *t* + 1^{th} moment and the first state data at the *t*^{th} moment.

In an embodiment, a prediction loss value is obtained based on the predicted state data at the j^{th} moment and first state data at the j^{th} moment, and the prediction loss value is configured for indicating a difference between the predicted state data at the j^{th} moment and the first state data at the j^{th} moment.

In an embodiment, the first state data at the j^{th} moment is determined from the first state data corresponding to each of the at least two moments, and the predicted state data predicted at the j^{th} moment is compared with the first state data at the j^{th} moment obtained based on the first observation data, to obtain the prediction loss value.

In some embodiments, a state loss value corresponding to the j^{th} moment is obtained based on the predicted state data at the j^{th} moment and the first state data at the j^{th} moment, and the state loss value is configured for indicating the difference between the predicted state data at the j^{th} moment and the first state data at the j^{th} moment.

In some embodiments, at the at least two moments, corresponding predicted state data may be acquired through a prediction process except the first moment, and the at least two moments each correspond to one piece of first state data. Therefore, state loss values respectively corresponding to the at least two moments may be obtained according to the first state data at the j^{th} moment and the predicted state data at the j^{th} moment among the at least two moments.

In some embodiments, the difference between the predicted state data at the j^{th} moment and the first state data at the j^{th} moment is determined through a preset loss function. That is, the predicted state data at the j^{th} moment and the first state data at the j^{th} moment are substituted into the preset loss function, to obtain the state loss value corresponding to the j^{th} moment.

In some embodiments, the foregoing preset loss function may be implemented as at least one of a cross entropy loss function, a mean square error loss function, a logarithmic loss function, a least absolute deviations loss (L1 Loss) function, and the like, which is not limited herein.

In an embodiment, the first state data at the j^{th} moment is determined from the first state data corresponding to each the at least two moments, and the difference between the predicted state data predicted at the j^{th} moment and the first state data at the j^{th} moment obtained based on the first observation data is determined, to obtain the prediction loss value representing the difference between the first state data at the j^{th} moment and the first state data at the j^{th} moment.

In some embodiments, the state loss values respectively corresponding to the at least two moments are summed, to obtain the prediction loss value.

In some embodiments, the state loss values respectively corresponding to the at least two moments are determined according to the foregoing process, and then a summation operation is performed on the plurality of state loss values, to obtain the prediction loss value.

In an embodiment, as shown in the following formula 2, the formula 2 is a formula for obtaining the prediction loss value by combining the state loss values respectively corresponding to the at least two moments. Formula 2: ${L}_{t}^{w} = {\sum }_{t = 1}^{n} \left‖{\hat{s}}_{t}-{s}_{t}\right‖$${L}_{t}^{w}$ represents the prediction loss value; *n* represents a quantity of loss training steps, and may be considered as a quantity of the at least two moments; *ŝₜ* represents the predicted state data at the *t*^{th} moment; and *sₜ* represents the first state data at the *t*^{th} moment.

In an embodiment, the environmental simulation model is trained through the prediction loss value, to obtain the world model.

In an embodiment, a training process of a preset quantity of times of training is implemented for the environmental simulation model through the prediction loss value, to obtain the world model. Alternatively, a training process of a preset quantity of times of training is implemented for the environmental simulation model through the prediction loss value, until the loss value no longer decreases, to obtain the world model.

As shown in FIG. 4, FIG. 4 is a schematic diagram of training to obtain the world model.

The world model is a model obtained based on training, and has the same network structure as the environmental simulation model. Therefore the environmental simulation model before training may also referred to as the world model. An input of the world model 410 includes a state action sequence *τ*={*s*₀, *a*₀, *s*₁, *a*₁, ... , *sₙ*, *aₙ*}, including the first state data *sₜ* (e.g., *s*₀ at a moment 0, and *s*₁ at the moment 1) and the first action data *aₜ* (e.g., *a*₀ at the moment 0, and *a*₁ at the moment 1), and also including the first observation data *oₜ* (e.g., *o*₀ at the moment 0, and *o*₁ at the moment 1).

A state action prediction sequence *τ̂* is predicted through the world model 410, including the predicted state data and the predicted action data corresponding to each of the at least two moments; and the prediction loss value may be calculated through the state action prediction sequence *τ̂* and the state action sequence *τ̂*, thereby training the world model 410 through the prediction loss value.

The prediction loss value analyzed by integrating the at least two moments is obtained by using the state loss values respectively corresponding to the at least two moments, so that the world model can be intensively trained through the prediction loss value, thereby improving efficiency of training the world model.

Step 340: Perform state prediction on the predicted action data at the t^{th} moment and first state data at the t^{th} moment through the world model, to obtain second state data at a k^{th} moment.

The k^{th} moment is a moment subsequent to the t^{th} moment among the at least two moments.

In an embodiment, after the predicted action data at the t^{th} moment and the first state data at the t^{th} moment are obtained, the state prediction process is performed through the world model. The world model is obtained by training the environmental simulation model. Therefore, the world model and the environmental simulation model have the same neural network structure, but network parameters may be different due to training.

As shown in the foregoing formula 1, *f_{w}* may represent the trained world model. *f_{w}*(*δsₜ*|*oₜ*, *aₜ*, *π*) may represent a neural network expression of the world model. When state prediction is performed for the k^{th} moment through the world model, the predicted action data at the t^{th} moment and the first action data at the t^{th} moment may be acquired. After the predicted action data at the t^{th} moment and the first action data at the t^{th} moment are inputted into the world model *f_{w}*, a state change difference when transitioning from the t^{th} moment to the k^{th} moment is outputted, accordingly, the state change difference corresponding to the k^{th} moment is obtained, and then the summation operation is performed on the first state data at the t^{th} moment and the state change difference corresponding to the k^{th} moment, thereby obtaining the second state data corresponding to the k^{th} moment.

Step 350: Train the control policy based on the second state data at the k^{th} moment and reference action data at the k^{th} moment, to obtain a trained control policy.

In some embodiments, an example in which a process of training the control policy is supervised learning is used. An objective of the supervised learning is to allow the robot to learn to map a state to a corresponding action. Then, the loss value is usually implemented as a loss between the reference action data and the predicted second state data, and an action represented by the predicted second state data is made to be close to a reference action represented by the reference action data as much as possible.

In an embodiment, after the second state data at the k^{th} moment is predicted, it may be determined, based on the collected first observation data at the k^{th} moment, that the reference action data at the k^{th} moment has strong purposiveness. Therefore, the predicted second state data at the k^{th} moment may be compared with the reference action data at the k^{th} moment, to determine a difference between the second state data at the k^{th} moment and the reference action data at the k^{th} moment.

In some embodiments, an example in which the process of training the control policy is reinforcement learning is used. An objective of the reinforcement learning is to allow the robot to learn a value of using an action in a state. Then, the loss value is usually implemented as a difference between the acquired first state data and the predicted second state data.

In an embodiment, after the second state data at the k^{th} moment is predicted, it may be determined, based on the collected first observation data at the k^{th} moment, that the first state data at the k^{th} moment has strong reliability. Therefore, the predicted second state data at the k^{th} moment may be compared with the first state data at the k^{th} moment, to determine a difference between the second state data at the k^{th} moment and the first state data at the k^{th} moment.

In an embodiment, the control policy is trained through the loss value, to obtain the trained control policy.

In some embodiments, the loss value corresponding to the k^{th} moment is acquired based on the difference between the second state data at the k^{th} moment and the reference action data at the k^{th} moment, and policy parameters of the control policy are adjusted through the loss value, to obtain the trained control policy.

The difference between the second state data at the k^{th} moment and the reference action data at the k^{th} moment may be determined through a preset loss function corresponding to this phase. That is, the second state data at the k^{th} moment and the reference action data at the k^{th} moment are substituted into the preset loss function, and the loss value corresponding to the k^{th} moment is outputted through the preset loss function.

In some embodiments, the foregoing specified loss function may be implemented as at least one of a cross entropy loss function, a mean square error loss function, a logarithm loss function, a least absolute deviations loss (L1 Loss) function, and the like, which is not limited herein.

In some embodiments, loss values respectively corresponding to the at least two moments are acquired, and the policy parameters in the control policy are iteratively adjusted through the loss values respectively corresponding to the at least two moments, to obtain the trained control policy.

In an embodiment, the control policy includes an encoder and a decoder, and the policy parameters are implemented as network parameters corresponding to the encoder, and/or, the policy parameters are implemented as network parameters corresponding to the decoder, etc.

The trained control policy is configured for controlling the action of the robot.

In an embodiment, after a planned path is given, the robot may efficiently control the action of the robot according to the trained control policy. For example, the predicted action data is acquired more accurately through the trained control policy, to perform an action process and the like based on the predicted action data.

In an embodiment, the environmental simulation model and the control policy are jointly deployed on the robot, to jointly control the robot and assist the robot in the motion process. In addition to being deployed on the robot, the environmental simulation model and the control policy may be cooperatively optimized, so that the robot can adapt to different environments and tasks through the trained world model and the trained control policy, thereby improving an autonomous decision making and execution capability.

In some embodiments, the training processes respectively corresponding to the environmental simulation model and the control policy may be implemented as sequential execution processes, or may be implemented as alternating execution processes. The following provides a description of the training process.

### (1) Sequential execution process

In an embodiment, after the control policy is acquired first, under the condition that a predicted control policy is kept unchanged, the environmental simulation model is trained through the first state data and the first observation data corresponding to each of the at least two moments, to obtain the world model. Further, under the condition that the world model is kept unchanged, the process of training the control policy is implemented through the first state data, the first observation data, and the reference action data corresponding to each of the at least two moments, and the trained control policy is finally obtained.

In other words, the control policy is controlled first, and the world model is obtained through training. Then, the world model is controlled to be unchanged, and the trained control policy is obtained through training.

### (2) Alternating execution process

In an embodiment, the at least two moments are divided into two moment groups, and the two moment groups include a first moment group and a second moment group.

After the control policy is acquired first, under the condition that a predicted control policy is kept unchanged, the environmental simulation model is trained through first state data and first observation data corresponding to each moment in the first moment group among the at least two moments, to obtain a simulation model trained for the first time. Further, under the condition that the simulation model trained for the first time is kept unchanged, a first training process for the control policy is performed through the first state data, the first observation data, and reference action data corresponding to each moment in the first moment group, and the control policy trained for the first time is obtained.

Then, the simulation model trained for the first time is trained through first state data and first observation data corresponding to each moment in the second moment group among the at least two moments, to obtain the world model. Further, under the condition that the world model is kept unchanged, a second training process for the control policy trained for the first time is performed through the first state data, the first observation data, and reference action data corresponding to each moment in the second moment group, until the trained control policy is obtained.

In other words, the control policy is controlled first, and the environmental simulation model is trained through the data at each moment in the first moment group. Then, the simulation model trained for the first time is controlled to be unchanged, and the control policy trained for the first time is obtained through training by using the data at each moment in the first moment group. Then, the control policy trained for the first time is controlled, and the simulation model trained for the first time is trained by using the data at each moment in the second moment group. Then, the simulation model trained for the first time is controlled to be unchanged, and the trained control policy is obtained through training by using the data at each moment in the second moment group.

The foregoing division of the at least two moment groups into the two moment groups is merely an exemplary example. The at least two moments may further be divided into more moment groups, so that the foregoing alternating training process is performed through data corresponding to each of moments in the plurality of moment groups. The embodiments of the present disclosure do not impose limitations on this.

In some embodiments, the world model and the trained control policy jointly assist the robot in a motion control process.

In an embodiment, in a software architecture of the robot, the world model and the trained control policy are integrated, and environmental state information, such as an obstacle position or a target position, is provided through the world model. The trained control policy more accurately generates an action of the robot by using the information of the world model, to respond to a current environment and a task requirement. Accordingly, by using an integration process, the robot is more flexible and adaptive, can execute various tasks in a complex and dynamic environment, and may also continuously learn and optimize the world model and the trained control policy through data such as data collected in the future and the reference action data, to fully improve an effect that the robot executes the task in the physical world.

The foregoing descriptions are merely exemplary examples, and are not limited by the embodiments of the present disclosure.

In conclusion, by using the collected first observation data, the running condition of the robot in the physical world can be fully utilized to perform an accurate supervised learning process. Under the limitation of the reference action data, the predicted action data is obtained through the control policy, so that the second state data at the later moment can be predicted through the predicted action data and the first state data. The control policy can be adjusted in a targeted manner through the second state data and the reference action data, thereby obtaining more accurate predicted action data through the trained control policy, improving policy stability and policy application accuracy of the trained control policy, and accordingly allowing the robot to have more accurate motion precision and a more stable running capability in the running process.

In the embodiments of the present disclosure, the content of the second state data predicted according to the world model is described. The world model is a model trained based on the first state data and the first observation data, and the trained world model is used as a state prediction model, to fully combine the world model and the control policy to deal with a complex environment in the motion process of the robot, improve adaptability and generalization performance of the robot, facilitate the robot to perform more efficient online planning and decision making, and improve efficiency and performance of the robot.

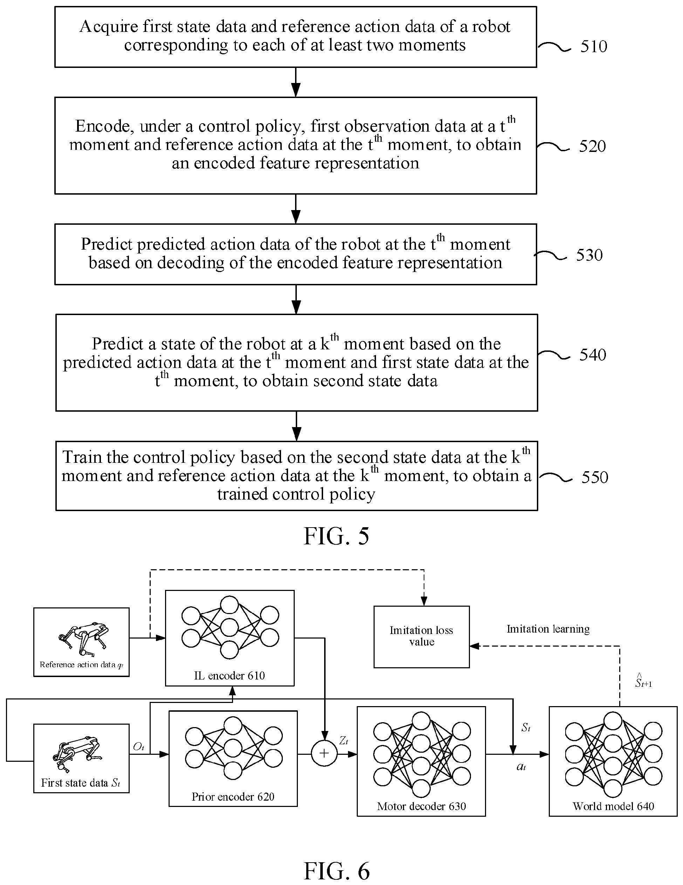

In an embodiment, in a process of predicting the predicted state data, the first observation data at the t^{th} moment and the reference action data at the t^{th} moment are mapped to a latent space to acquire an encoded feature representation, and then under the control policy, the predicted action data of the robot at the t^{th} moment is obtained according to the encoded feature representation. In an embodiment, as shown in FIG. 5, the foregoing embodiment shown in FIG. 2 may further be implemented in the following step 510 to step 550, where step 220 may further be implemented in the following step 520 to step 530.

Step 510: Acquire first state data and reference action data of a robot corresponding to each of at least two moments.

The first state data is data obtained after state processing is performed on first observation data, and the first observation data is data collected by the robot through a sensor in a running environment. The reference action data is configured for representing an expected posture of the robot in the running environment.

The content of step 510 has been described in step 210 and step 310 described above. Details are not provided herein.

Step 520: Encode, under a control policy, first observation data at a t^{th} moment and reference action data at the t^{th} moment, to obtain an encoded feature representation.

In an embodiment, an objective of acquiring the reference action data is to allow the robot to better imitate a motion sequence from a real living creature. Therefore, a process in which the robot imitates the reference action data may be converted into an encoder-decoder architecture, that is, an execution process of the control policy is implemented through the encoder-decoder architecture.

The encoder is configured to map inputted input data (e.g., the first observation data and the reference action data) into a latent space for representation, to capture key features of the input data, and the outputted encoded feature representation includes an abstract expression of the input data.

The decoder is configured to map the encoded feature representation outputted by the encoder back to an original data space, to generate a robot action similar to a reference action, that is, output predicted action data configured for implementing the robot action.

In an embodiment, a first encoder performs first encoding on the first observation data at the t^{th} moment and the reference action data at the t^{th} moment, to obtain a first feature representation.

The first encoder is configured to implement imitation learning on the action of the robot based on the reference action data.

In an embodiment, the first encoder is implemented as an imitation learning (IL) encoder. Imitation learning is a learning policy for training a machine learning model by imitating an expert behavior, that is, reference action data is obtained by collecting the expert behavior, and the imitation learning is implemented on the reference action data. The IL encoder attempts to imitate or copy a behavior observed from the reference action data. Usually, the IL encoder is responsible for mapping the first observation data and the reference action data to a latent representation, so that an output generated through the latent representation is similar to a behavior demonstrated by the reference action data.

In some embodiments, when the first observation data at the t^{th} moment and the reference action data at the t^{th} moment are analyzed, the first observation data at the t^{th} moment and the reference action data at the t^{th} moment are inputted to the first encoder, so as to generate the first feature representation based on the reference action data at the t^{th} moment and under the condition that a behavior represented by the reference action data at the t^{th} moment is imitated through the first observation data at the t^{th} moment.

In an embodiment, a second encoder performs second encoding on the first observation data at the t^{th} moment in a historical time period, to obtain a second feature representation.

The second encoder is configured to predict and analyze the action of the robot by using prior knowledge. The prior knowledge is knowledge learned in a process of training to obtain the second encoder.

In some embodiments, the prior knowledge includes at least one of knowledge such as task structure knowledge, domain characteristic knowledge, or model prior expectation. In many cases, a learning task may be performed more effectively by introducing the prior knowledge into a learning process through a prior encoder.

In an embodiment, the second encoder is implemented as the prior encoder. Prior usually refers to prior knowledge or expectation of a model for some information. The prior encoder is an encoder configured to capture such prior knowledge. The first observation data is inputted into the prior encoder, so that a latent representation may be obtained through mapping. The latent representation includes prior information about the input data, thereby helping the control policy to better use the prior knowledge to execute a task.

In some embodiments, when the first observation data at the t^{th} moment and the reference action data at the t^{th} moment are analyzed, the first observation data at the t^{th} moment is inputted into the second encoder, so as to analyze the first observation data at the t^{th} moment by using the prior knowledge and generate the second feature representation.

In an embodiment, the first feature representation and the second feature representation are fused to obtain the encoded feature representation.

In an embodiment, feature concatenation is performed on the first feature representation and the second feature representation, to obtain the encoded feature representation.

In other words, imitation information expressed by the first feature representation and prior information expressed by the second feature representation can be concatenated to obtain the encoded feature representation that expresses deeper and accurate information.

Step 530: Predict predicted action data of the robot at the t^{th} moment based on decoding of the encoded feature representation.

In an embodiment, the encoded feature representation is decoded through the decoder, to obtain the predicted action data of the robot at the t^{th} moment.

In an embodiment, the predicted action data of the robot at the t^{th} moment is predicted according to the encoded feature representation and the first observation data at the t^{th} moment.

In an embodiment, the encoded feature representation and the first observation data at the t^{th} moment are inputted into the decoder for decoding, and the predicted action data of the robot at the t^{th} moment is predicted.

Step 540: Predict a state of the robot at a k^{th} moment based on the predicted action data at the t^{th} moment and first state data at the t^{th} moment, to obtain second state data.

The k^{th} moment is a moment subsequent to the t^{th} moment.

In an embodiment, a state prediction process is performed through a trained world model, and the predicted action data at the t^{th} moment and the first state data at the t^{th} moment are inputted into the world model, to obtain the second state data of the robot at the k^{th} moment.

In an embodiment, in the sequential execution process described above, after the world model is trained through the data corresponding to each of the at least two moments, the predicted action data at the t^{th} moment and the first state data at the t^{th} moment are inputted into the world model, to obtain the second state data at the k^{th} moment. Alternatively, in the alternating execution process described above, the at least two moments are divided into the at least two moment groups, and the process of predicting the second state data at the k^{th} moment is implemented as: determining the t^{th} moment corresponding to the k^{th} moment, determining a moment group to which the t^{th} moment belongs, in a case that the t^{th} moment belongs to a q^{th} moment group in the at least two moment groups, training a q^{th} world model through data corresponding to each moment in the q^{th} moment group, and inputting the predicted action data at the t^{th} moment and the first state data at the t^{th} moment into the q^{th} world model, to obtain the second state data at the k^{th} moment, q being a positive integer.

The foregoing descriptions are merely exemplary examples, and are not limited by the embodiments of the present disclosure.

Step 550: Train the control policy based on the second state data at the k^{th} moment and reference action data at the k^{th} moment, to obtain a trained control policy.

The trained control policy is configured for controlling the action of the robot.

As shown in FIG. 6, FIG. 6 illustrates a schematic diagram of a training process of a control policy according to an embodiment of the present disclosure.

In a case that the control policy is implemented as a model or an algorithm, network structures or algorithm expressions corresponding to the control policies before and after the training are the same. Therefore, the policies before and after the training may be collectively referred to as the control policy. The control policy is implemented as a combination of an IL encoder 610, a prior encoder 620, and a motor decoder 630. Therefore, the process of training the control policy may be considered as a process of optimizing and adjusting network parameters respectively corresponding to the IL encoder 610, the prior encoder 620, and the motor decoder 630.

In an embodiment, an input of the IL encoder 610 includes first observation data *oₜ* corresponding to first state data *sₜ* and further includes reference action data *qₜ*. An output of the IL encoder 610 is a first feature representation. An input of the prior encoder 620 is the first observation data *oₜ,* and an output of the prior encoder 620 is a second feature representation. After feature fusion is performed on the first feature representation and the second feature representation, an encoded feature representation *zₜ* is obtained. By inputting the encoded feature representation *zₜ* into the motor decoder 630, predicted action data *aₜ* is obtained through decoding. In addition, state prediction is performed on the predicted action data *aₜ* and the first state data *sₜ* through a world model 640 to obtain predicted second state data *ŝ*_{*t*+1}. Finally, the control policy is trained through a loss value determined based on the predicted second state data *ŝ*_{*t*+1} and the reference action data, that is, the network parameters corresponding to the IL encoder 610, the prior encoder 620, and the motor decoder 630 are optimized and adjusted until the trained control policy is obtained.

A prior distribution *p*(*zₜ*|*oₜ*) and a posterior distribution *q*(*zₜ*|*oₜ, qₜ*) of the encoded feature representation are modeled as Gaussian distributions, as shown in the formula 3 and the formula 4 below. Formula 3: $p \left(\left.{z}_{t}\right|{o}_{t}\right) ∼ N \left({π}_{prior}\left(\left.{z}_{t}\right|{o}_{t}\right),{σ}^{2}I\right)$ Formula 4: $q \left(\left.{z}_{t}\right|{o}_{t},{q}_{t}\right) ∼ N \left({π}_{IL}\left(\left.{z}_{t}\right|{o}_{t},{q}_{t}\right)+{π}_{prior}\left(\left.{z}_{t}\right|{o}_{t}\right),{σ}^{2}I\right)$

*N*( ) represents the Gaussian distribution; *πₚᵣᵢₒᵣ*(*zₜ*|*oₜ*) represents the parameterization of a neural network *θₚᵣᵢₒᵣ* represented by the prior encoder 620; *π_{IL}*(*Zₜ*|*oₜ, qₜ*) represents the parameterization of a neural network *θ_{IL}* represented by the IL encoder 610; a represents a fixed standard deviation; and *I* represents a unit matrix.

A loss function of a loss value corresponding to the predicted second state data *ŝ*_{*t+*1} and the reference action data is implemented as the following formula 5. Formula 5: ${L}_{t}^{I} = 0.6 {L}_{t}^{jpos} + 0.05 {L}_{t}^{jvel} + 0.3 {L}_{t}^{bpos} + 0.05 {L}_{t}^{bvel}$${L}_{t}^{I}$ represents a loss value a *t*^{th} moment; ${L}_{t}^{jpos}$ represents a joint position loss; ${L}_{t}^{jvel}$ represents a joint velocity loss; ${L}_{t}^{bpos}$ represents a robot position loss; and ${L}_{t}^{bvel}$ represents a robot velocity loss.

The joint position loss ${L}_{t}^{jpos}$ is shown in the following formula 6. Formula 6: ${L}_{t}^{jpos} = 1 - exp \left(-{\left‖{\hat{J}}_{t}-{\overline{J}}_{t}\right‖}^{2}\right)$

*Ĵₜ* represents a predicted joint position in the second state data at the *t*^{th} moment; and *J̅ₜ* represents a joint position in the reference action data at the *t*^{th} moment.

The joint velocity loss ${L}_{t}^{jvel}$ is shown in the following formula 7. Formula 7: ${L}_{t}^{jvel} = 1 - exp \left(-{\left‖{\hat{\dot{J}}}_{t}-{\overline{\dot{J}}}_{t}\right‖}^{2}\right)$${\hat{\dot{J}}}_{t}$ represents a predicted joint velocity in the second state data at the *t*^{th} moment, and ${\overline{\dot{J}}}_{t}$ represents a joint velocity in the reference action data at the *t*^{th} moment.

The robot position loss ${L}_{t}^{bpos}$ is shown in the following formula 8. Formula 8: ${L}_{t}^{bpos} = 1 - exp \left(-20{\left‖{\hat{p}}_{t}^{base}-{\overline{p}}_{t}^{base}\right‖}^{2}-10{\left‖{\hat{i}}_{t}^{base}-{\overline{i}}_{t}^{base}\right‖}^{2}\right)$${\hat{p}}_{t}^{base}$ represents a predicted robot body position (e.g., a centroid position of the robot) in the second state data at the *t*^{th} moment; ${\overline{p}}_{t}^{base}$ represents a robot body position in the reference action data at the *t*^{th} moment; ${\hat{ι}}_{t}^{base}$ represents a predicted robot body direction (e.g., a centroid direction of the robot) in the second state data at the *t*^{th} moment; and ${\overline{ι}}_{t}^{base}$ represents a robot body direction in the reference action data at the *t*^{th} moment.

The robot velocity loss ${L}_{t}^{bvel}$ is shown in the following formula 9. Formula 9: ${L}_{t}^{bvel} = 1 - exp \left(-20{\left‖{\hat{\dot{p}}}_{t}^{base}-{\overline{\dot{p}}}_{t}^{base}\right‖}^{2}-10{\left‖{\hat{i}}_{t}^{base}-{\overline{i}}_{t}^{base}\right‖}^{2}\right)$${\hat{\dot{p}}}_{t}^{base}$ represents a predicted robot body velocity (e.g., a centroid velocity of the robot) in the second state data at the *t*^{th} moment; ${\overline{\dot{p}}}_{t}^{base}$ represents a robot body velocity in the reference action data at the *t*^{th} moment; ${\hat{i}}_{t}^{base}$ represents a predicted robot body angular velocity (e.g., a centroid angular velocity of the robot) in the second state data at the *t*^{th} moment; and ${\overline{i}}_{t}^{base}$ represents a robot body angular velocity in the reference action data at the *t*^{th} moment.

The foregoing descriptions are merely exemplary examples, and are not limited by the embodiments of the present disclosure.

In conclusion, by using the collected first observation data, the running condition of the robot in the physical world can be fully utilized to perform an accurate supervised learning process. Under the limitation of the reference action data, the predicted action data is obtained through the control policy, so that the second state data at the later moment can be predicted through the predicted action data and the first state data. The control policy can be adjusted in a targeted manner through the second state data and the reference action data, thereby obtaining more accurate predicted action data through the trained control policy, improving policy stability and policy application accuracy of the trained control policy, and accordingly allowing the robot to have more accurate motion precision and a more stable running capability in the running process.

In this embodiment of the present disclosure, the content of using a method for obtaining the encoded feature representation through mapping to determine the predicted action data is described. The control policy is implemented as an encoder and decoder architecture. The encoder performs deep analysis on the acquired data, to improve acquiring precision of the encoded feature representation, and more comprehensively and deeply obtain data information of the robot, thereby acquiring the predicted action data through a decoding process of the decoder, improving standardization of action prediction, improving flexibility of a robot learning process, and also improving expression and adaptability of the control policy.

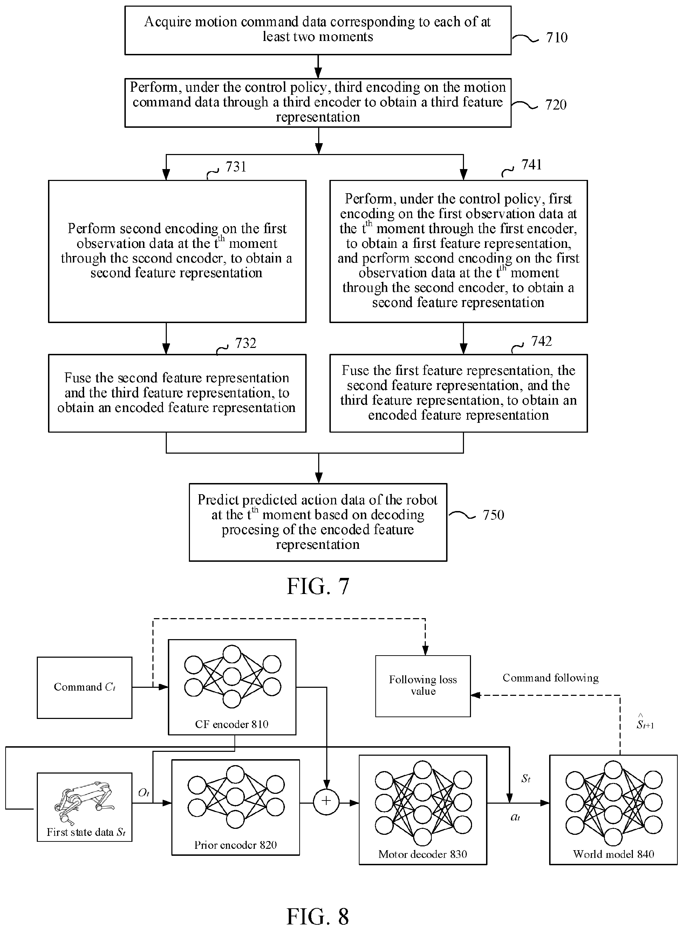

In an embodiment, when the predicted action data is acquired through the control policy, motion command data may also be acquired, so that the robot learns information about following a command to move, thereby enriching diversity in acquiring the predicted action data, and facilitating the application of the robot to multiple motion scenarios. In an embodiment, as shown in FIG. 7, step 220 shown in FIG. 2 above may also be implemented as the following step 710 to step 750.

Step 710: Acquire motion command data corresponding to each of at least two moments.

The motion command data is configured for representing data for guiding a robot to execute a motion process.

In some embodiments, the motion command data is implemented as at least one of multiple data values such as a linear velocity, an angular velocity, a position, and a direction. A general direction and velocity of a motion may be provided for the robot through the motion command data. If the motion command data is implemented as values of the linear velocity and the angular velocity, a process, such as moving or rotating, performed by the robot in an environment can be known through the motion command data.

In an embodiment, the motion command data is instructive information transmitted from an outside to the robot, so that the robot executing a particular action is known. For example, the motion command data is from a human operator, an upper-layer decision-making system, a remote controller, or another automation system, and represents an expectation of the robot to perform a certain action to some extent.

The at least two moments each correspond to one piece of motion command data, thereby representing a situation in which the robot is guided to move at a current moment.

In some embodiments, an expected linear velocity and an expected angular velocity are randomly acquired to form the motion command data.

In an embodiment, a piece of random motion command data is given as *cₜ* = [*v̅ₜ*, *ω̅ₜ*], where *v̅ₜ* represents an expected linear velocity at any moment *t*, and *ω̅ₜ* represents an expected angular velocity at any moment *t*. In other words, in a process of training a control policy, the policy training process may be performed through the random motion command data.

Step 720: Perform, under the control policy, third encoding on the motion command data through a third encoder to obtain a third feature representation.

In an embodiment, the control policy is implemented as an encoder-decoder architecture. The encoder is configured to map inputted input data to a latent space for representation, to capture a key feature of the input data, and an outputted encoded feature representation includes an abstract expression of the input data. A decoder is configured to map the encoded feature representation outputted by the encoder back to an original data space, to generate a robot action similar to a reference action, that is, output predicted action data configured for implementing the robot action.

In some embodiments, the control policy includes the third encoder. The third encoder is configured to analyze a motion situation that the robot executes command following based on the motion command data. Command following (CF) refers to a capability of a machine learning model to accurately understand and execute a command provided by a user. The command following is represented as understanding and executing, by the machine learning model, a series of commands. In some embodiments, a single-round command or a command indicated by a multi-round dialog is included. In the command implemented by the multi-round dialog, the machine learning model needs to memorize previous context semantics and commands, to ensure a coherent and accurate response.

In an embodiment, the third encoder is implemented as a command following encoder. The CF encoder is responsible for encoding given motion command data (e.g., a linear velocity and an angular velocity) into the third feature representation. An objective of the encoding is to map the motion command data to a latent space, which includes the motion command data and information possibly about the first observation data. Then, the motion situation of the robot is analyzed through the third feature representation generated by the CF encoder, to analyze whether the robot successfully complies with a motion command represented by the motion command data, and whether there is a deviation or an error in an execution process.

In other words, the third feature representation may be configured for evaluating a degree of understanding and execution accuracy of the motion command data by the robot.

In some embodiments, when predicted action data at a t^{th} moment is predicted, motion command data at the t^{th} moment is inputted into the third encoder, so as to generate a third feature representation at the t^{th} moment.

The third encoder is introduced to analyze and learn the motion situation that the robot executes command following based on the motion command data, so as to further improve acquiring precision of the encoded feature representation, and a certain authorization prospect is achieved.

In an embodiment, when the control policy includes the second encoder and the third encoder, the following step 731 to step 732 are performed.

Step 731: Perform second encoding on the first observation data at the t^{th} moment through the second encoder, to obtain a second feature representation.

In an embodiment, the control policy includes the second encoder. The second encoder is configured to predict and analyze an action by using prior knowledge. The prior knowledge is knowledge learned during training to obtain the second encoder.

In some embodiments, the second encoder is implemented as a prior encoder. The first observation data at the t^{th} moment is inputted into the second encoder, so as to analyze the first observation data at the t^{th} moment by using the prior knowledge, and generate the second feature representation.

Step 732: Fuse the second feature representation and the third feature representation, to obtain an encoded feature representation.

In an embodiment, feature concatenation is performed on the third feature representation and the second feature representation to obtain the encoded feature representation.

In an embodiment, when the control policy includes the first encoder, the second encoder, and the third encoder, the following step 741 to step 742 are performed.

Step 741: Perform, under the control policy, first encoding on the first observation data at the t^{th} moment through the first encoder, to obtain a first feature representation, and perform second encoding on the first observation data at the t^{th} moment through the second encoder, to obtain a second feature representation.

In an embodiment, the content of step 741 has been described in step 520 described above. Details are not provided herein.

Step 742: Fuse the first feature representation, the second feature representation, and the third feature representation, to obtain an encoded feature representation.

In an embodiment, feature concatenation is performed on the first feature representation, the second feature representation, and the third feature representation, to obtain the encoded feature representation. The encoded feature representation can fully integrate command following information, imitation learning information, and prior knowledge information, exhibiting more accurate characteristics.

Step 750: Predict predicted action data of the robot at the t^{th} moment based on decoding of the encoded feature representation.

In an embodiment, the predicted action data of the robot at the t^{th} moment is predicted through the decoding of the encoded feature representation by the decoder in the control policy. In a decoding process implemented by the decoder, the decoder converts the encoded feature representation used as a latent feature in a hidden space into the predicted action data used as an output sequence. That is, the encoded feature representation before being processed by the decoder is a low-dimensional vector representation, and the decoded predicted action data is high-dimensional data in the original data space.

In an embodiment, state analysis is performed on the predicted action data at the t^{th} moment through a world model, to obtain second state data at a k^{th} moment, and then the control policy is trained according to the second state data at the k^{th} moment and reference state data at the k^{th} moment.

FIG. 8 is a schematic diagram of training a control policy and obtaining a trained control policy.

Based on the trained control policy being a policy obtained through training, if the control policy is implemented as a model or an algorithm, a network structure or an algorithm expression is the same as that of the control policy. Therefore, policies before and after training may be collectively referred to as the control policy.

The control policy is implemented as a combination of a CF encoder 810, a prior encoder 820, and a motor decoder 830. Therefore, the process of training the control policy may be considered as a process of optimizing and adjusting network parameters respectively corresponding to the CF encoder 810, the prior encoder 820, and the motor decoder 830.

In an embodiment, an input of the CF encoder 810 is motion command data *cₜ*, and an output is a third feature representation. An input of the prior encoder 820 is first observation data *oₜ* corresponding to first state data *sₜ*, and an output of the prior encoder 820 is a second feature representation. The third feature representation and the second feature representation are fused to obtain an encoded feature representation *zₜ*. The encoded feature representation *zₜ* is inputted into the motor decoder 830, and predicted action data *aₜ* is obtained through decoding. In addition, state prediction is performed on the predicted action data *aₜ* and the first state data *sₜ* through a world model 840, to obtain predicted second state data *ŝ*_{*t*+1}. Finally, the control policy is trained through a following loss value between the predicted second state data *ŝ*_{*t*+1} and the motion command data, that is, the network parameters respectively corresponding to the CF encoder 810, the prior encoder 820, and the motor decoder 830 are optimized and adjusted until the trained control policy is obtained.

A posterior distribution *q*(*zₜ*|*oₜ*, *qₜ*) of the encoded feature representation is modeled as a Gaussian distribution, and is shown in the following formula 10. Formula 10: $q \left(\left.{z}_{t}\right|{o}_{t},{c}_{t}\right) ∼ N \left({π}_{prior}\left(\left.{z}_{t}\right|{o}_{t}\right)+{π}_{CF}\left(\left.{z}_{t}\right|{o}_{t},{c}_{t}\right),{σ}^{2}I\right)$

*N*( ) represents the Gaussian distribution; *πₚᵣᵢₒᵣ*(*zₜ*|*oₜ*) represents the parameterization of a neural network *θ*ₚᵣᵢₒᵣ represented by the prior encoder 820; *π_{CF}*(*zₜ*|*o_{t,}cₜ*) represents the parameterization of a neural network *θ_{CF}* represented by the CF encoder 810; σ represents a fixed standard deviation; and *I* represents a unit matrix.

An example in which action command data is an angular velocity and a linear velocity is used. Because a training objective is to allow the robot to follow an action command represented by the action command data, the following loss value includes a linear velocity loss ${L}_{t}^{V}$ and an angular velocity loss ${L}_{t}^{ω}$.

A relationship between the following loss value, the linear velocity loss ${L}_{t}^{V}$, and the angular velocity loss ${L}_{t}^{ω}$ is shown in the following formula 11. Formula 11: ${L}_{t}^{CF} = 2 {L}_{t}^{V} + {L}_{t}^{ω}$

The linear velocity loss ${L}_{t}^{V}$ is shown in the following formula 12. Formula 12: ${L}_{t}^{V} = 1 - exp \left(-2\left|{\overline{v}}_{t}-{\hat{v}}_{t}\right|\right)$

*v̅ₜ* represents a linear velocity in motion following data at the *t*^{th} moment, and *v̂ₜ* represents a predicted linear velocity in the second state data at the *t*^{th} moment.

The angular velocity loss ${L}_{t}^{ω}$ is shown in the following formula 13. Formula 13: ${L}_{t}^{ω} = 1 - exp \left(-2\left|{\overline{ω}}_{t}-{\hat{ω}}_{t}\right|\right)$

*ω̅ₜ* represents an angular velocity in the motion following data at the *t*^{th} moment, and *ω̂ₜ* represents a predicted angular velocity in the second state data at the *t*^{th} moment.

In some embodiments, schematic diagrams of training a control policy and obtaining a trained control policy that are respectively shown in FIG. 6 and FIG. 8 may be used in combination. In other words, the control policy includes the IL encoder, the prior encoder, the CF encoder, and the motor decoder.

In other words, when the encoded feature representation *zₜ* is acquired, the first feature representation is outputted through the IL encoder, the second feature representation is outputted through the prior encoder, and the third feature representation is outputted through the CF encoder, thereby obtaining the encoded feature representation *zₜ* by fusion. Further, the IL encoder, the prior encoder, and the motor decoder are trained based on the loss value (which may also be referred to as an imitation loss value) acquired in FIG. 6, the CF encoder, the prior encoder, and the motor decoder are trained based on the following loss value acquired in FIG. 8, and the trained control policy is obtained.

The foregoing descriptions are merely exemplary examples, and are not limited by the embodiments of the present disclosure.

In conclusion, by using the collected first observation data, the running condition of the robot in the physical world can be fully utilized to perform an accurate supervised learning process. Under the limitation of the reference action data, the predicted action data is obtained through the control policy, so that the second state data at the later moment can be predicted through the predicted action data and the first state data. The control policy can be adjusted in a targeted manner through the second state data and the reference action data, thereby obtaining more accurate predicted action data through the trained control policy, improving policy stability and policy application accuracy of the trained control policy, and accordingly allowing the robot to have more accurate motion precision and a more stable running capability in the running process.

In this embodiment of the present disclosure, it is introduced that in the process of acquiring the motion command data and participating in the generation of the encoded feature representation, the third encoder analyzes a motion situation that the robot performs command following based on the motion command data, so that the robot can learn following information of a following command when moving by using the control policy, thereby facilitating adaptation of the robot to various motion scenarios and improving motion adaptation flexibility of the robot.

In an embodiment, the foregoing robot control method may be applied to a use scenario of a quadruped robot. The foregoing robot control method may also be referred to as a quadruped robot control method for effectively learning an agile motion skill based on a model.

First, an overall framework of the method is briefly described. The overall framework includes two parts, that is, the world model and the control policy.

The world model learns to approximate unknown dynamics of simulation and reality. Given a current robot state (e.g., the first state data) and an action (e.g., the first action data during the training above or the reference action data during application), the next state can be predicted (e.g., the second state data). According to the control policy, agile behaviors are learned by imitating motions of real animals, and an analysis process can be implemented by directly collecting samples predicted by the well trained world model.

The world model and the control policy are updated and iteratively trained in a supervised manner. First, a state-action pair may be collected under a fixed control policy, to adapt to system dynamics, and the world model is used for fitting (i.e., training the world model). Then, the control policy is updated and trained through interaction with the fixed world model. The entire process is repeated until the control policy converges.

In an embodiment, the robot control method is described by using the following parts.

### (1) World model

In an embodiment, starting from training a world model *f_{w}*, the world model predicts a next state based on a current state and action, utilizing a residual form as shown in the formula 1 above.

During training of the world model, the robot collects a state-action sequence under the control policy. The training of the world model is a supervised learning method with an n-step prediction loss, which is beneficial for long-term prediction, as shown in the formula 2 above.

### (2) Imitation learning

In the background of an imitation task, an objective of this embodiment of the present disclosure is to imitate a motion sequence collected from a real animal. The control policy may be converted into an encoder-decoder architecture. For example, an analysis process is implemented by using a variational auto-encoder (VAE) architecture, as shown in the formula 3 to the formula 9 above.

In some embodiments, to ensure good formation of a latent space for further finding a suitable encoded feature representation in a downstream command following task, a relative entropy (Kullback-Leible, KL) divergence regularization loss shown in the following formula 14 may be added. Formula 14: ${L}_{t}^{KL} = {D}_{KL} \left(q\left(\left.{z}_{t}\right|{o}_{t},{q}_{t}\right)\left‖p\left(\left.{z}_{t}\right|{o}_{t}\right)\right.\right) = {\left‖{π}_{IL}\left({o}_{t}, {q}_{t}\right)\right‖}^{2} / 2 {σ}^{2}$${L}_{t}^{KL}$ represents a divergence loss value; *D_{KL}* represents a difference between a prior distribution *p*(*zₜ*|*oₜ*) and a posterior distribution *q*(*zₜ*|*oₜ*,*qₜ*); *π_{IL}*(*oₜ*, *qₜ*) represents the parameterization of a neural network *θ_{IL}* represented by the IL encoder; and *σ* represents a fixed standard deviation.

### (3) Command following task

In an embodiment, a policy that follows a linear velocity and an angular velocity specified by a user may be trained. By introducing a command following encoder *π_{CF}*(*zₜ*|*oₜ*, *cₜ*), the action command data is encoded into the latent space.

In some embodiments, to maintain the naturalness of a motion behavior of the robot, only network parameters corresponding to the command following encoder may be updated during training, while network parameters of a prior network and the motor decoder remain unchanged.

### (4) Fine tuning in a real robot

Due to a difference between simulation and reality, a policy learned from the simulation may fail when being deployed to the real robot. Therefore, the command following encoder and the motor decoder may be fine-tuned on the real robot to follow a required path. To keep a natural behavior of an original motor encoder ${π}_{M}^{ori}$, a regularization term may be introduced for normalization, as shown in the following formula 15. Formula 15: ${L}_{t}^{reg} = \left‖{π}_{M}^{ori}\left(\left.{a}_{t}\right|{o}_{t},{z}_{t}\right)-{π}_{M}\left(\left.{a}_{t}\right|{o}_{t},{z}_{t}\right)\right‖$${L}_{t}^{reg}$ represents a regularization term; ${π}_{M}^{ori} \left(\left.{a}_{t}\right|{o}_{t},{z}_{t}\right)$ represents the parameterization of a neural network represented by the motor encoder; and *π_{M}*(*aₜ*|*oₜ*, *zₜ*) represents an adjusted network parameter.

The foregoing descriptions are merely exemplary examples, and are not limited by the embodiments of the present disclosure.

In an embodiment, to evaluate the effectiveness of the foregoing robot control method, a comparison experiment is performed in a reinforcement learning environment Isaac Gym and a real quadruped robot. An objective of the experiment is to answer the following key questions.
(1) The improvement in sample efficiency of the robot control method compared to a reinforcement learning method.
(2) An effect of a fine-tuning process performed on the real robot in reducing a simulation-to-reality difference.
(3) A generalization capability of a fine-tuned policy on tasks not involved in previous training.

The following three experimental processes are performed for the foregoing three questions.
(1) Experiments are performed in both a simulation world and the physical world, to compare the robot control method according to the embodiments of the present disclosure with a benchmark method based on reinforcement learning in terms of sample efficiency.
(2) In experiments in the physical world, a fine-tuning process is performed on a real quadruped robot, to show a real difference effect.
(3) To further show the generalization capability, a path following task is further performed on four unseen paths by using the robot control method according to the embodiments of the present disclosure.

In an embodiment, the following provides a description of a simulation experiment and a physical world experiment.

### I. Simulation experiment

### (1) Sample efficiency in an imitation learning task.

In an embodiment, to solve the first problem about the sample efficiency, a model participating in the comparison trains an imitation task from the beginning by using the reinforcement learning environment Isaac Gym. The Isaac Gym is a high-performance physical simulator that is configured for robot learning based on a graphics processing unit (GPU), and can simulate a batch of robots at the same time. In some embodiments, in this task, 128 agents may be simultaneously used for completing training.

In some embodiments, the robot control method according to the embodiments of the present disclosure is compared with a proximal policy optimization (PPO) algorithm in terms of the quantity of samples collected from the Isaac Gym. A reward function of the PPO algorithm is defined as ${r}_{t} = 1 - {L}_{t}^{I}$. *rₜ* is the reward function at a time step t; and ${L}_{t}^{I}$ is a calculated loss value.

In an embodiment, the same policy network structure is maintained for the two methods (the method in the embodiments of the present disclosure and the PPO algorithm) to facilitate a meaningful comparison.

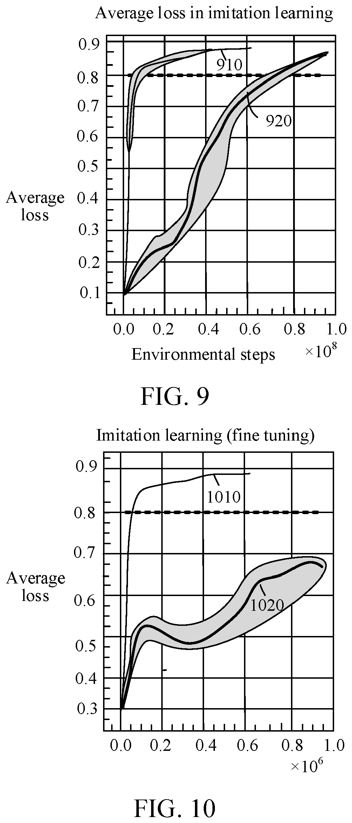

As shown in FIG. 9, which is an average reward during training, a curve 910 represents the method according to the embodiments of the present disclosure, where an average reward of 0.8 is achieved in a case of approximately 5 million samples, as shown by a dashed line in FIG. 9. In comparison, a curve 920 represents the PPO algorithm, where more than 70 million samples are needed to reach a similar result. The sample efficiency of the method according to the embodiments of the present disclosure is ten or more times higher than that of the PPO algorithm. A gray area distributed on a peripheral side represents a distribution state of discrete data.

### (2) Comparison of sample efficiency in adapting to new environments.

In an embodiment, directly training the PPO algorithm on the real robot is risky and may easily damage the robot. Therefore, a method of changing physical parameters and fine-tuning in simulation may be introduced for training.

In some embodiments, some physical parameters may be changed for the imitation task. As shown in the following Table 1, Table 1 shows physical parameters of an original environment (an environment used when the robot is trained) and test environments (which may be the same as the original environment, or may be different from the original environment). The test environments show an environment 1, an environment 2, an environment 3, and an environment 4.

**Table 1**

| \ | Mass (kg) | Proportionality coefficient (kp) | Control delay (ms) | Maximum moment (Nm) |
|---|---|---|---|---|
| Original environment | 5.74 | 50.0 | 0.0 | 18.0 |
| Environment 1 | 14.0 | 40.0 | 6.0 | 16.2 |
| Environment 2 | 5.74 +3.0 | 50.0 | 6.0 | 18.0 |
| Environment 3 | 5.74 +5.0 | 50.0 | 6.0 | 18.0 |
| Environment 4 | 5.74 +7.0 | 50.0 | 6.0 | 18.0 |

For example, in the environment 1, the mass of the robot is increased from 5.74 kilograms to 14 kilograms. A significant change in the mass of the robot may render the original policy inapplicable to the robot, making it extremely difficult for the original policy to function in the new environment.

In some embodiments, to simulate a scenario similar to robot data collection in the physical world, two robots may be used in the simulation environment.

In an embodiment, 3000 samples are accumulated in each training iteration, which is equivalent to 1 minute of data collection when a control frequency is 50 Hz. For the PPO algorithm, policy update is performed every 32 steps.

A training curve is shown in FIG. 10. A curve 1010 in FIG. 10 highlights that the method according to the embodiments of the present disclosure may obtain an average reward of 0.8 in this challenging environment by using approximately 50000 samples (equivalent to data of approximately 17 minutes).

On the contrary, for the PPO algorithm represented by a curve 1020 in FIG. 10, even with ten times the sample size, the PPO algorithm still performs poorly. A gray area distributed on a peripheral side represents a distribution state of discrete data.

In some embodiments, to further research performance of command following, the task may further be extended to path following, where the robot aims to travel according to a pre-defined path.

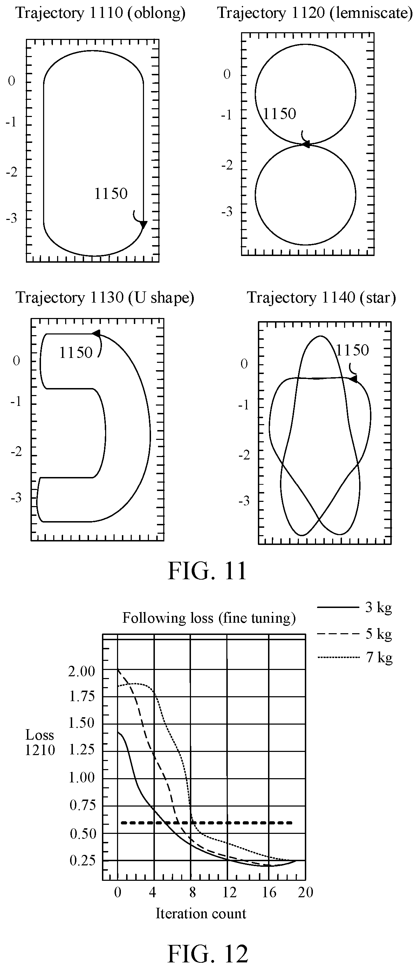

As shown in FIG. 11, FIG. 11 is a schematic diagram of four expected trajectories, including a trajectory 1110 (an oblong), a trajectory 1120 (a lemniscate), a trajectory 1130 (a U-shape), and a trajectory 1140 (a star), where an arrow 1150 on each trajectory indicates an initial position.

In some embodiments, path information is converted into a command (motion command data) by using a purely reactive algorithm (PR algorithm).

In an embodiment, an example in which a target velocity of 0.9 m/s is used for following a rectangular trajectory shown by the trajectory 1110 is used, the trajectory 1110 is a trajectory participating in training, and motion analysis may be performed by using the three environments shown in Table 1.

In some embodiments, to simulate a fine tuning process in the physical world, each training iteration involves collection of 1500 samples (data of 30 seconds).

As shown in FIG. 12, a training curve of a loss 1210 is described. It may be observed from FIG. 12 that, under workloads of 3 kg, 5 kg, and 7 kg, the method according to the embodiments of the present disclosure can achieve a loss of less than 0.6 by using data of approximately 4 iterations (2 minutes), 6 iterations (3 minutes), and 8 iterations (4 minutes). These results indicate good performance at these velocities. Some discrete data distributions may also exist, and are not shown in the figure. In comparison, a loss of the PPO algorithm almost remains unchanged with such a limited sample size, and therefore, no result is plotted.

In other words, by using the manner in the embodiments of the present disclosure, high sample efficiency and adaptability of the method for different environments in imitation learning and path following tasks can be demonstrated.

### II. Real robot experiment

### (1) Adaptation from simulation to reality.

To answer the foregoing second question, a physical experiment may be performed by using a real robot. Due to the difference between simulation and reality, the policy trained in simulation may not be able to follow the path at an expected velocity and may exhibit significant velocity lag at a high target velocity. This process highlights the necessity of fine tuning in the physical world.

In some embodiments, three adaptation experiments are performed on a trajectory 1110 shown in FIG. 11. Target velocities are respectively 0.6 m/s, 0.9 m/s, and 1.2 m/s. To fine-tune the policy in the real world, data (1500 samples) of 30 seconds needs to be collected in each iteration to train the world model, and then a policy network is updated by using data predicted by the adapted world model.

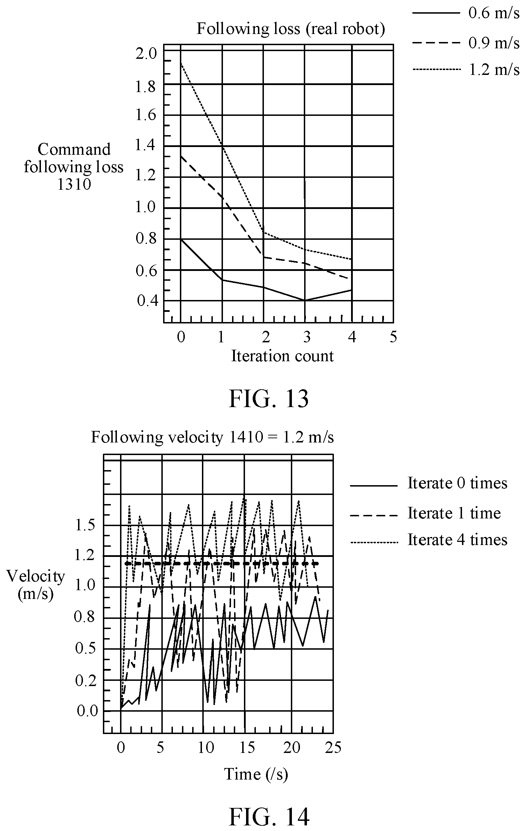

As shown in FIG. 13, FIG. 13 is a variation diagram of a command following loss 1310 when four iterations (data for two minutes) are performed on the real robot at the target velocities of 0.6 m/s, 0.9 m/s, and 1.2 m/s.

As shown in the following Table 2, Table 2 shows an average linear velocity error ${e}_{v} = {\sum }_{t = 1}^{n} \left|{\overline{v}}_{t}-{\hat{v}}_{t}\right| / n$ and an angular velocity loss ${e}_{ω} = {\sum }_{t = 1}^{n} \left|{\overline{ω}}_{t}-{\hat{ω}}_{t}\right| / n$ calculated in a trajectory of 30 seconds after each iteration of adaptation in the physical world, where a policy 0 is an original policy, and a policy 1 to a policy 4 are other comparative policies.

**Table 2**

| \ | Velocity: 0.6 m/s | | Velocity: 0.9 m/s | | Velocity: 1.2 m/s | |
|---|---|---|---|---|---|---|
| | *eᵥ* | *e_{ω}* | *eᵥ* | *e_{ω}* | *eᵥ* | *e_{ω}* |
| Policy 0 | 0.088 | 0.587 | 0.250 | 0.612 | 0.696 | 0.501 |
| Policy 1 | 0.055 | 0.241 | 0.194 | 0.565 | 0.431 | 0.319 |
| Policy 2 | 0.047 | 0.232 | 0.098 | 0.297 | 0.148 | 0.276 |
| Policy 3 | 0.038 | 0.190 | 0.078 | 0.269 | 0.103 | 0.286 |
| Policy 4 | 0.047 | 0.189 | 0.063 | 0.249 | 0.081 | 0.240 |

As shown in Table 2, the loss is significantly reduced after the first iteration. Particularly, in a case that the velocity is 1.2 m/s, a velocity error is reduced by 0.26 m/s or above. After the four iterations, the loss converges, and final performance is very effective in terms of command following.

As shown in FIG. 14, FIG. 14 shows following at a following velocity 1410 of 1.2 m/s during actual world adaptation on the real robot. Apparently, in the original policy (iteration 0), an actual velocity clearly lags behind the target velocity. After the first iteration, the actual velocity may follow a target to some extent, but may significantly fluctuate. In the fourth iteration, the policy effectively accompanies the target velocity, and the vibration is minimum. To avoid data mixing, FIG. 14 shows statistical results of zero iteration, one iteration, and four iterations. Compared to the problem of significant data fluctuations after one iteration, the data fluctuations after the four iterations are smaller.

In other words, after actual world adaptation is performed on the real robot, the robot moves along a path of trajectory 1110 at a velocity of 1.2 meters per second.

### (2) Generalization on unknown landform.

In an embodiment, to answer the foregoing last question, velocity and path performance of the policy according to the embodiments of the present disclosure on unseen motion command data is evaluated. In the previous experiment, real robot data is collected for a total of 7.5 minutes at the target velocities of 0.6 m/s, 0.9 m/s, and 1.2 m/s.

In some embodiments, offline fine tuning is performed by using the data, to obtain an adaptive policy.

As shown in FIG. 11, performance conditions on all paths are tested, including unseen paths about the trajectory 1120, the trajectory1130, and the trajectory 1140, and generalization capabilities for unseen target velocities of 0.7 m/s, 0.8 m/s, and 1.0 m/s.

As shown in the following Table 3, Table 3 shows an average linear velocity error (*eᵥ*), an angular velocity error (*e_{ω}*), and a distance error (*eₚ*) calculated on the four paths for 30 seconds, where the distance error is defined as ${e}_{p} = {\sum }_{t = 1}^{n} \left‖{p}_{t}-{p}_{t}^{∗}\right‖$, and *pₜ* and ${p}_{t}^{∗}$ are a robot position and a target position at time t respectively; and ${p}_{t}^{∗}$ is obtained by integrating the target velocity with time.

**Table 3**

| \ | Trajectory 1110 | | | Trajectory 1120 | | | Trajectory 1130 | | | Trajectory 1140 | | |
|---|---|---|---|---|---|---|---|---|---|---|---|---|
| | *eᵥ* | *e_{ω}* | *eₚ* | *eᵥ* | *e_{ω}* | *eₚ* | *eᵥ* | *e_{ω}* | *eₚ* | *eᵥ* | *e_{ω}* | *eₚ* |
| Initial | 0.26 | 0.57 | 2.03 | 0.22 | 0.64 | 2.19 | 0.23 | 0.57 | 1.56 | 0.28 | 0.63 | 2.03 |
| Adjusted | 0.05 | 0.23 | 0.90 | 0.05 | 0.19 | 0.72 | 0.05 | 0.21 | 0.77 | 0.05 | 0.23 | 0.90 |

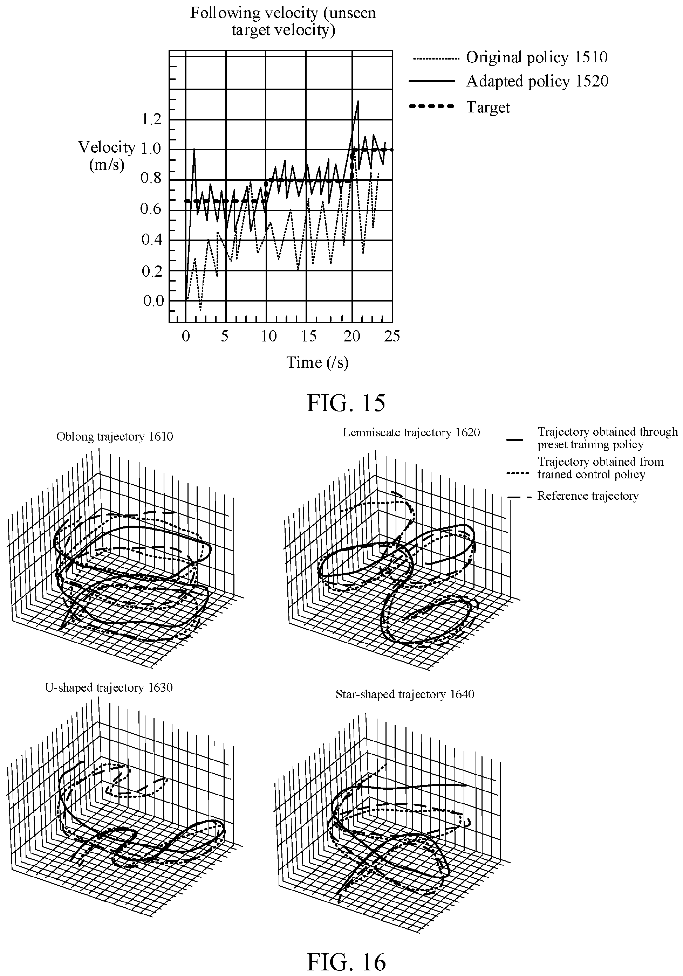

It can be seen from Table 3 that after offline fine tuning, all errors are reduced by half or more. FIG. 15 vividly shows a velocity accompanying condition along the trajectory 1110 on the real robot in an original policy 1510 and an adapted policy 1520. The original policy lags behind the unseen target velocity, and the trained control policy obtained through training in the embodiments of the present disclosure may effectively accompany them, and an average linear velocity error is approximately 0.05 m/s.

FIG. 16 shows actual trajectories of command following paths at different unseen target velocities. The trajectories include an oblong trajectory 1610 participating in training, and further include a lemniscate trajectory 1620, a U-shaped trajectory 1630, and a star-shaped trajectory 1640 that do not participate in training. It can be seen from FIG. 16 that, the original policy (a preset training policy) clearly lags behind a reference trajectory, and the trained control policy obtained through training in the embodiments of the present disclosure can effectively follow the reference trajectory, and performs faster even at a higher velocity. In conclusion, experimental results demonstrate that the trained control policy can successfully process unseen commands and follow unfamiliar paths, highlighting the generalization capability of the embodiments of the present disclosure.

In some embodiments, the foregoing motion control technology for the trained quadruped robot can be applied to at least one of the following scenarios.
(1) Exploration and rescue: The quadruped robot can operate in various severe and complex environments, such as disaster sites, fires, and earthquakes, to provide assistance to rescue workers.
(2) Agriculture: The quadruped robot can walk in the farmland, helping a farmer complete work such as seeding and harvesting.
(3) Industrial production: The quadruped robot can carry weights in a factory, helping workers complete repetitive work.
(4) Medical field: The quadruped robot can help the disabled to walk and provide support, and can further be configured for rehabilitation, blind guide, and the like.
(5) Entertainment and education: The quadruped robot can be used as a toy or an educational tool to help children learn science and technology knowledge and skills.

The foregoing scenarios are merely exemplary examples, and are not limited by the embodiments of the present disclosure.

In conclusion, by using the collected first observation data, the running condition of the robot in the physical world can be fully utilized to perform an accurate supervised learning process. Under the limitation of the reference action data, the predicted action data is obtained through the control policy, so that the second state data at the later moment can be predicted through the predicted action data and the first state data. The control policy can be adjusted in a targeted manner through the second state data and the reference action data, thereby obtaining more accurate predicted action data through the trained control policy, improving policy stability and policy application accuracy of the trained control policy, and accordingly allowing the robot to have more accurate motion precision and a more stable running capability in the running process.

In the embodiments of the present disclosure, through the introduced robot control method, the world model and the control policy are trained in the supervised manner, thereby significantly improving the sample efficiency. A two-phase method may also be used, which relates to policy training in simulation and fine tuning in the real robot, and fine tuning can be performed in the physical world by using less data. This process significantly reduces a required data volume in the real world, and makes learning of more complex motion skills possible.

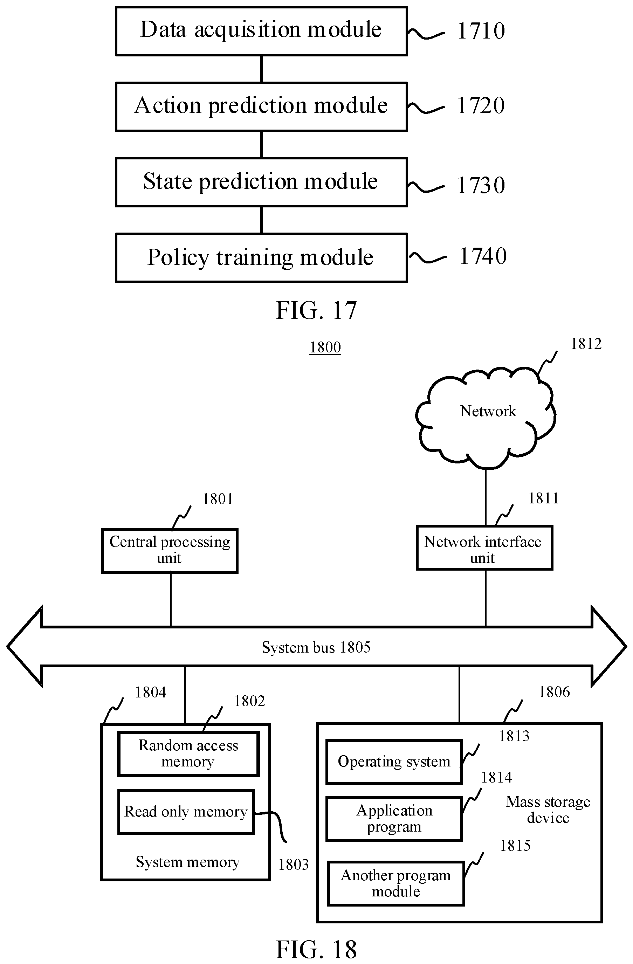

FIG. 17 is a structural block diagram of a robot control apparatus according to an embodiment of the present disclosure. As shown in FIG. 17, the apparatus includes the following parts:
a data acquisition module 1710, configured to acquire first state data and reference action data of a robot corresponding to each of at least two moments, the first state data being data obtained by converting first observation data, the first observation data being data collected by the robot through a sensor in a running environment, and the reference action data being configured for representing an expected posture of the robot in the running environment;
an action prediction module 1720, configured to predict, under a control policy, predicted action data of the robot at a t^{th} moment based on first observation data at the t^{th} moment and reference action data at the t^{th} moment among the at least two moments, the control policy being configured to guide an action of the robot, and t being a positive integer;
a state prediction module 1730, configured to predict a state of the robot at a k^{th} moment based on the predicted action data at the t^{th} moment and first state data at the t^{th} moment, to obtain second state data at the k^{th} moment, the k^{th} moment being a moment subsequent to the t^{th} moment among the at least two moments; and
a policy training module 1740, configured to train the control policy based on the second state data at the k^{th} moment and reference action data at the k^{th} moment, to obtain a trained control policy, the trained control policy being configured for controlling the action of the robot.

In an embodiment, the state prediction module 1730 is further configured to acquire a world model, the world model being configured to predict a state of the robot, and the world model being a model trained based on the first state data and the first observation data; and perform state prediction on the predicted action data at the t^{th} moment and the first state data at the t^{th} moment through the world model, to obtain the second state data at the k^{th} moment.

In an embodiment, the state prediction module 1730 is further configured to acquire an environmental simulation model, the environmental simulation model being a model to be trained to obtain the world model, the environmental simulation model being configured to predict predicted state data at a j^{th} moment according to first state data at an i^{th} moment and first observation data at the i^{th} moment, the j^{th} moment being a moment subsequent to the i^{th} moment among the at least two moments, and i and j being positive integers; obtain a prediction loss value based on the predicted state data at the j^{th} moment and first state data at the j^{th} moment, the prediction loss value being configured for indicating a difference between the predicted state data at the j^{th} moment and the first state data at the j^{th} moment, and the prediction loss value being configured to indicate the difference between the predicted state data at the j^{th} moment and the first state data at the j^{th} moment; and train the environmental simulation model through the prediction loss value, to obtain the world model.

In an embodiment, the state prediction module 1730 is further configured to obtain a state loss value corresponding to the j^{th} moment based on the predicted state data at the j^{th} moment and the first state data at the j^{th} moment, the state loss value being configured for indicating the difference between the predicted state data at the j^{th} moment and the first state data at the j^{th} moment; and sum the state loss values respectively corresponding to the at least two moments, to obtain the prediction loss value.

In an embodiment, the action prediction module 1720 is further configured to encode, under the control policy, the first observation data at the t^{th} moment and the reference action data at the t^{th} moment, to obtain an encoded feature representation; and predict the predicted action data of the robot at the t^{th} moment based on decoding of the encoded feature representation.

In an embodiment, the action prediction module 1720 is further configured to perform first encoding on the first observation data at the t^{th} moment and the reference action data at the t^{th} moment through a first encoder, to obtain a first feature representation, the first encoder being configured to implement imitation learning on the action of the robot based on the reference action data; and perform second encoding on the first observation data at the t^{th} moment through a second encoder, to obtain a second feature representation, the second encoder being configured to predict and analyze the action of the robot by using prior knowledge, the prior knowledge being knowledge learned during training to obtain the second encoder, and the control policy including the first encoder and the second encoder; and fuse the first feature representation and the second feature representation, to obtain the encoded feature representation.

In an embodiment, the action prediction module 1720 is further configured to acquire motion command data corresponding to each of the at least two moments, the motion command data being configured for representing data for guiding the robot to execute a motion process; perform, under the control policy, third encoding on the motion command data through a third encoder, to obtain a third feature representation, the third encoder being configured to analyze a motion situation that the robot executes command following based on the motion command data; perform second encoding on the first observation data at the t^{th} moment through a second encoder, to obtain a second feature representation, the second encoder being configured to predict and analyze the action of the robot by using prior knowledge, and the prior knowledge being knowledge learned during training to obtain the second encoder; and obtain the encoded feature representation based on the second feature representation and the third feature representation.

In an embodiment, the action prediction module 1720 is further configured to fuse the second feature representation and the third feature representation, to obtain the encoded feature representation, the control policy including the second encoder and the third encoder; alternatively, perform first encoding on the first observation data at the t^{th} moment and the reference action data at the t^{th} moment through a first encoder, to obtain a first feature representation, the first encoder being configured to implement imitation learning on the action of the robot based on the reference action data; and fuse the first feature representation, the second feature representation, and the third feature representation to obtain the encoded feature representation, the control policy including the first encoder, the second encoder, and the third encoder.

In an embodiment, the action prediction module 1720 is further configured to decode the encoded feature representation through a decoder in the control policy, to output the predicted action data of the robot at the t^{th} moment.

In an embodiment, the policy training module 1740 is further configured to obtain a loss value corresponding to the k^{th} moment based on a difference between the second state data at the k^{th} moment and the reference action data at the k^{th} moment; and adjust policy parameters in the control policy according to the loss value, to obtain the trained control policy.

In an embodiment, the policy training module 1740 is further configured to acquire loss values respectively corresponding to the at least two moments; and iteratively adjust the policy parameters in the control policy through the loss values respectively corresponding to the at least two moments, to obtain the trained control policy.

In an embodiment, the data acquisition module 1710 is further configured to acquire first observation data collected by the robot at the at least two moments respectively; perform state processing on the first observation data corresponding to each of the at least two moments, to obtain the first state data corresponding to each of the at least two moments; and acquire a reference action sequence, the reference action sequence being configured for representing an expected posture sequence of the robot in the running environment, and the reference action sequence including reference action data corresponding to each of the at least two moments.

The robot control apparatus provided in the foregoing embodiments is merely illustrated with an example of division of the foregoing function modules. In practical application, the foregoing functions may be allocated to and completed by different function modules according to requirements, that is, an internal structure of the apparatus is divided into different function modules, so as to complete all or part of the functions described above. In addition, the robot control apparatus provided in the foregoing embodiments and the robot control method embodiments belong to the same concept. For the specific implementation process, reference is made to the method embodiments. No further details will be given herein.

FIG. 18 illustrates a schematic structural diagram of a server according to an embodiment of the present disclosure. The server 1800 includes a central processing unit (CPU) 1801, a system memory 1804 including a random access memory (RAM) 1802 and a read only memory (ROM) 1803, and a system bus 1805 connecting the system memory 1804 and the central processing unit 1801. The server 1800 further includes a mass storage device 1806 configured to store an operating system 1813, an application program 1814, and another program module 1815.

The mass storage device 1806 is connected to the central processing unit 1801 through a mass storage controller (not shown) connected to the system bus 1805. The mass storage device 1806 and a computer-readable medium associated with the mass storage device provide non-volatile storage for the server 1800.

Generally, the computer-readable medium may include a computer storage medium and a communication medium. The computer storage medium includes volatile and non-volatile media, and removable and non-removable media implemented by using any method or technology used for storing information such as computer-readable instructions, data structures, program modules, or other data. The system memory 1804 and the mass storage device 1806 may be collectively referred to as a memory.

According to various embodiments of the present disclosure, the server 1800 may be further connected to a remote computer on a network for running through a network such as the Internet. In other words, the server 1800 may be connected to a network 1812 through a network interface unit 1811 connected to the system bus 1805, or may be connected to other types of networks or remote computer systems (not shown) through the network interface unit 1811.

The memory further includes one or more programs. The one or more programs are stored in the memory and configured to be executed by the CPU.

An embodiment of the present disclosure further provides a computer device. The computer device includes a processor and a memory. The memory has at least one instruction, at least one program, a code set, or an instruction set stored therein. The at least one instruction, the at least one program, the code set, or the instruction set is loaded and executed by the processor to implement the robot control method according to each of the foregoing method embodiments.

An embodiment of the present disclosure further provides a computer-readable storage medium, having at least one instruction, at least one program, a code set, or an instruction set stored therein. The at least one instruction, the at least one program, the code set, or the instruction set is loaded and executed by a processor to implement the robot control method according to each of the foregoing method embodiments.

An embodiment of the present disclosure further provides a computer program product or a computer program, including computer instructions. The computer instructions are stored in a computer-readable storage medium. A processor of a computer device reads the computer instructions from the computer-readable storage medium and executes the computer instructions, to cause the computer device to perform the robot control method according to any one of the foregoing embodiments.

The foregoing descriptions are merely exemplary embodiments of this application, but are not intended to limit this application. Any modification, equivalent replacement, improvement, etc. made within the spirit and principle of this application shall fall within the protection scope of this application.

## Claims

1. A method for robot control, the method being executable by a computing device, and the method comprising:
acquiring, for each of at least two moments, first state data and reference action data of a robot, the first state data being converted from first observation data collected by a sensor of the robot in a running environment, and the reference action data indicating an expected posture of the robot in the running environment;
generating, under a control policy, predicted action data of the robot at a t^{th} moment based on first observation data at the t^{th} moment and reference action data at the t^{th} moment, the control policy being configured to guide an action of the robot, and t being a positive integer;
generating second state data at a k^{th} moment by predicting a state of the robot at the k^{th} moment based on the predicted action data at the t^{th} moment and first state data at the t^{th} moment, the t^{th} moment and the the k^{th} moment being among the at least two moments, and the k^{th} moment being subsequent to the t^{th} moment; and
updating the control policy based on the second state data at the k^{th} moment and reference action data at the k^{th} moment, to obtain a trained control policy for robot control.

2. The method according to claim 1, wherein the generating second state data at a k^{th} moment by predicting a state of the robot at the k^{th} moment based on the predicted action data at the t^{th} moment and first state data at the t^{th} moment comprises:
acquiring a world model for predicting a state of the robot, and the world model being trained based on the first state data and the first observation data; and
predicting the state of the robot at the k^{th} moment based on the predicted action data at the t^{th} moment and the first state data at the t^{th} moment by means of the world model, to obtain the second state data at the k^{th} moment.

3. The method according to claim 2, wherein the acquiring a world model comprises:
acquiring an environmental simulation model being trainable to obtain the world model, the environmental simulation model generating predicted state data at a j^{th} moment according to the first state data at an i^{th} moment and first observation data at the i^{th} moment, the j^{th} moment being subsequent to the i^{th} moment among the at least two moments, and i and j being positive integers;
obtaining a prediction loss value based on the predicted state data at the j^{th} moment and first state data at the j^{th} moment, the prediction loss value indicating a difference between the predicted state data at the j^{th} moment and the first state data at the j^{th} moment; and
training the environmental simulation model based on the prediction loss value, to obtain the world model.

4. The method according to claim 3, wherein the obtaining a prediction loss value based on the predicted state data at the j^{th} moment and first state data at the j^{th} moment comprises:
obtaining a state loss value corresponding to the j^{th} moment based on the predicted state data at the j^{th} moment and the first state data at the j^{th} moment, the state loss value indicating the difference between the predicted state data at the j^{th} moment and the first state data at the j^{th} moment; and
summing the state loss values corresponding to the at least two moments, to obtain the prediction loss value.

5. The method according to any one of claims 1 to 4, wherein the generating, under a control policy, predicted action data of the robot at a t^{th} moment based on first observation data at the t^{th} moment and reference action data at the t^{th} moment comprises:
encoding, under the control policy, the first observation data at the t^{th} moment and the reference action data at the t^{th} moment, to obtain an encoded feature representation; and
generating the predicted action data of the robot at the t^{th} moment by decoding the encoded feature representation.

6. The method according to claim 5, wherein the encoding, under the control policy, the first observation data at the t^{th} moment and the reference action data at the t^{th} moment, to obtain an encoded feature representation comprises:
performing first encoding on the first observation data at the t^{th} moment and the reference action data at the t^{th} moment through a first encoder, to obtain a first feature representation, the first encoder implementing imitation learning on the action of the robot based on the reference action data;
performing second encoding on the first observation data at the t^{th} moment through a second encoder, to obtain a second feature representation, the second encoder analyzing the action of the robot by using prior knowledge, the prior knowledge being learned in training of the second encoder, and the control policy comprising the first encoder and the second encoder; and
fusing the first feature representation and the second feature representation, to obtain the encoded feature representation.

7. The method according to claim 5 or 6, wherein the encoding, under the control policy, the first observation data at the t^{th} moment and the reference action data at the t^{th} moment, to obtain an encoded feature representation comprises:
acquiring motion command data corresponding to each of the at least two moments, the motion command data indicating a motion process for guiding the robot;
performing, under the control policy, third encoding on the motion command data through a third encoder, to obtain a third feature representation, the third encoder analyzing a command-following motion situation of the robot based on the motion command data;
performing second encoding on the first observation data at the t^{th} moment through a second encoder, to obtain a second feature representation, the second encoder analyzing the action of the robot by using prior knowledge, and the prior knowledge being learned in training of the second encoder; and
obtaining the encoded feature representation based on the second feature representation and the third feature representation.

8. The method according to claim 7, wherein the obtaining the encoded feature representation based on the second feature representation and the third feature representation comprises:
fusing the second feature representation and the third feature representation, to obtain the encoded feature representation, the control policy comprising the second encoder and the third encoder; or,
performing first encoding on the first observation data at the t^{th} moment and the reference action data at the t^{th} moment through a first encoder, to obtain a first feature representation, the first encoder implementing imitation learning on the action of the robot based on the reference action data; and
fusing the first feature representation, the second feature representation, and the third feature representation to obtain the encoded feature representation, the control policy comprising the first encoder, the second encoder, and the third encoder.

9. The method according to any one of claims 5 to 8, wherein the generating the predicted action data of the robot at the t^{th} moment by decoding the encoded feature representation comprises:
decoding the encoded feature representation through a decoder in the control policy, to output the predicted action data of the robot at the t^{th} moment.

10. The method according to any one of claims 1 to 9, wherein the updating the control policy based on the second state data at the k^{th} moment and reference action data at the k^{th} moment, to obtain a trained control policy comprises:
obtaining a loss value corresponding to the k^{th} moment based on a difference between the second state data at the k^{th} moment and the reference action data at the k^{th} moment; and
adjusting policy parameters in the control policy according to the loss value, to obtain the trained control policy.

11. The method according to claim 10, wherein the adjusting policy parameters in the control policy according to the loss value, to obtain the trained control policy comprises:
acquiring loss values respectively corresponding to the at least two moments; and
iteratively adjusting the policy parameters of the control policy based on the loss values corresponding to the at least two moments, to obtain the trained control policy.

12. The method according to any one of claims 1 to 11, wherein the acquiring, for each of at least two moments, first state data and reference action data of a robot comprises:
acquiring the first observation data collected by the robot at the at least two moments respectively;
performing state processing on the first observation data corresponding to each of the at least two moments, to obtain the first state data corresponding to each of the at least two moments; and
acquiring a reference action sequence, the reference action sequence indicating an expected posture sequence of the robot in the running environment, and the reference action sequence comprising reference action data corresponding to each of the at least two moments.

13. An apparatus for robot control, comprising:
a data acquisition module, configured to acquire, for each of at least two moments, first state data and reference action data of a robot, the first state data being converted from first observation data collected by a sensor of the robot in a running environment, and the reference action data indicating an expected posture of the robot in the running environment;
an action prediction module, configured to generate, under a control policy, predicted action data of the robot at a t^{th} moment based on first observation data at the t^{th} moment and reference action data at the t^{th} moment, the control policy being configured to guide an action of the robot, and t being a positive integer;
a state prediction module, configured to generate second state data at a k^{th} moment by predicting a state of the robot at the k^{th} moment based on the predicted action data at the t^{th} moment and first state data at the t^{th} moment, the t^{th} moment and the the k^{th} moment being among the at least two moments, and the k^{th} moment being subsequent to the t^{th} moment; and
a policy training module, configured to update the control policy based on the second state data at the k^{th} moment and reference action data at the k^{th} moment, to obtain a trained control policy for robot control.

14. A computer device, comprising a processor and a memory, the memory having at least one program stored therein, and the at least one program being loaded and executed by the processor to implement the robot control method according to any one of claims 1 to 12.

15. A computer-readable storage medium, the storage medium having at least one program stored therein, and the at least one program being loaded and executed by a processor to implement the robot control method according to any one of claims 1 to 12.

16. A computer program product, comprising computer instructions, the computer instructions, when executed by a processor, causing the robot control method according to any one of claims 1 to 12 to be implemented.
